(19) 

**Europäisches Patentamt**
**European Patent Office**
**Office européen des brevets**

(11) **EP 4 610 847 A1**

(12) **EUROPEAN PATENT APPLICATION**

(43) Date of publication:
**03.09.2025 Bulletin 2025/36**

(21) Application number: **24160156.6**

(22) Date of filing: **28.02.2024**

(51) International Patent Classification (IPC):
**G06F 16/31** (2019.01)    **G06F 16/35** (2025.01)

(52) Cooperative Patent Classification (CPC):
**G06F 16/316; G06F 16/353**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **British Telecommunications public limited company**
**London E1 8EE (GB)**

(72) Inventor: **The designation of the inventor has not yet been filed**

(74) Representative: **British Telecommunications public limited company**
**Intellectual Property Department**
**9th Floor**
**One Braham**
**Braham Street**
**London E1 8EE (GB)**

(54) **DATA STRUCTURES AND METHODS SUITABLE FOR NAMED-ENTITY RESOLUTION AND RECOGNITION IN NETWORK SECURITY AND MANAGEMENT**

(57)    The present disclosure relates to named-entity resolution and recognition, such as may be used to pre-process data for input to automated cybersecurity and telecommunications network management systems. Methods described herein relate to a data structure comprising a hash table consisting of one or more buckets, referred to herein as a 'vector hash table', wherein: each bucket of the vector hash table stores a string comprising one or more aliases for a respective entity, referred to herein as an 'alias string'; and for each bucket, a corresponding key is a vector embedding of that alias string.

FIG. 7

## Description

### FIELD

The present disclosure relates to named-entity resolution and recognition, such as may be used to pre-process data for input to automated cybersecurity and telecommunications network management systems.

More specifically, aspects relate to: data structures; computer-readable data carriers having such data structures stored thereon; data carrier signals carrying such data structures; computer-implemented methods of: generating and updating such data structures, automatically tagging or labelling entity tokens and data sets using such data structures, training named-entity recognition (NER) machine learning (ML) models using such tagged data sets, generating zero-shot NER ML models from such trained models, automatically tagging entity tokens and data sets using such trained and zero-shot NER ML models, generating knowledge graphs using such tagged data sets, and configuring networks using such tagged data sets and/or knowledge graphs; such trained and zero-shot NER ML models; such knowledge graphs; data processing systems configured to perform such methods; computer programs comprising instructions which, when the program is executed by a computer, cause the computer to carry out such methods; computer-readable data carriers having such programs stored thereon; and data carrier signals carrying such computer programs.

### BACKGROUND

NER technologies are directed to processing unstructured text data in order to locate and classify named entities. This can be crucial in fields such as cybersecurity where large volumes of unstructured text data, such as threat reports, are generated at too rapid a rate for manual processing to be feasible in the short time-frames available to act on cyber threat intelligence before systems are compromised. Similar time pressures arise in telecommunications network management, where it is crucial to act on fault reports rapidly to minimise downtime. In scenarios like these, automated systems can be put in place to act appropriately on information gleaned from unstructured text.

ML models for NER have been developed. ML is increasingly deployed to address challenges that are unsuitable for being, or too costly to be, addressed using traditional computer programming techniques. Increasing data volumes, widening varieties of data and more complex system requirements tend to require ML techniques. It can therefore be necessary to produce models that can analyse larger, more complex data sets and deliver faster, more accurate results, preferably without programmer intervention. Many different ML algorithms exist and, in general, an ML algorithm seeks to approximate an ideal target function, f, that best maps input variables x (the domain) to output variables y (the range), thus:

$$y = f(x)$$

The ML algorithm as an approximation of $f$ is therefore suitable for providing predictions of $y$. Supervised ML algorithms generate a model for approximating $f$ based on training data sets, each of which is associated with an output $y$. Supervised algorithms generate a model approximating $f$ by a training process in which predictions can be formulated based on the output $y$ associated with a training data set. The training process can iterate until the model achieves a desired level of accuracy on the training data. Semi-supervised algorithms can also be employed, such as a hybrid of supervised and unsupervised ML approaches.

Notably, the range, $y$, of $f$ can be, inter alia: a set of classes of a classification scheme, whether formally enumerated, extensible or undefined, such that the domain $x$ is classified e.g. for labelling, categorising etc.; or a set of clusters of data, where clusters can be determined based on the domain $x$ and/or features of an intermediate range $y'$. Clustering algorithms can be used, for example, to infer $f$ to describe hidden structure from data including unlabelled data. Such algorithms include, inter alia: k-means; mixture models; neural networks; and hierarchical clustering. Anomaly detection algorithms can also be employed. Classification algorithms address the challenge of identifying which of a set of classes or categories (range $y$) one or more observations (domain $x$) belong. Such algorithms are typically supervised or semi-supervised based on a training set of data. Algorithms can include, inter alia: linear classifiers such as Fisher's linear discriminant, logistic regression, Naive Bayes classifier; support vector machines (SVMs) such as a least squares support vector machine; quadratic classifiers; kernel estimation; decision trees; neural networks; and learning vector quantisation.

To perform well, NER ML models require large volumes of training data, which may be in the form of labelled text. Generating such training data manually is extremely time-consuming.

In order to accurately and/or consistently classify named entities by NER, a standardised nomenclature and taxonomy is required. Such standardisation is often lacking when unstructured text data is gathered from multiple sources and/or has been partially or wholly human-generated. For example, the entity referred to as 'APT 27' by some cybersecurity analysts is known as 'Emissary Panda' to others. There is variation in nomenclature even amongst those who use 'APT' and '27' to refer to this entity, with it variously being written e.g. as 'APT 27', 'apt 27', 'APT-27', and 'APT#27'.

Typographical errors can also lead to variation, for example 'APT 27' may be mistyped as 'PAT 27'. Further, entities are sometimes classified in different ways by different sources, for example 'Blackenery' is sometimes classified as malware and sometimes as a threat actor. Existing entity resolution technologies to address this issue require attribute data for the entities, which is not always available and, when it is, takes time to retrieve and process.

What is needed is improved named-entity resolution and recognition technologies.

## SUMMARY

The invention is defined in the independent claims. Optional features are set out in the dependent claims. Aspects of the disclosure relate to the following clauses.

A1. A data structure comprising a hash table consisting of one or more buckets, referred to herein as a 'vector hash table', wherein:

each bucket of the vector hash table stores a string comprising one or more aliases for a respective entity, referred to herein as an 'alias string'; and
for each bucket, a corresponding key is a vector embedding of that alias string.

A2. The data structure of clause A1, further comprising a data substructure storing all of the keys to the vector hash table.

The data substructure can be a database.

A3. The data structure of either of clauses A1 or A2, wherein each vector embedding is generated using an artificial neural network, 'ANN', optionally a hardware ANN, optionally an ANN trained on data relating to network security and/or management, optionally an ANN which performs deterministic vector embedding.

A4. The data structure of any of clauses A1 to A3, wherein each entity relates to network security and/or management.

A5. The data structure of any of clauses A1 to A4, further comprising a hash table, referred to herein as a 'tag hash table', wherein:

for each bucket of the tag hash table, a corresponding key is a standardised entity name; and
each bucket of the tag hash table stores a tag associated with the corresponding entity.

The data structure can be configured for use in a computer-implemented method of configuring a network.

A6. A computer-readable data carrier having stored thereon the data structure of any of clauses A1 to A5.

A7. A data carrier signal carrying the data structure of any of clauses A1 to A5.

A8. A computer-implemented method of generating the data structure of any of clauses A1 to A5, the method comprising:

obtaining a data source;
identifying one or more entities referred to in the data source; and
for each of those one or more entities:

i. identifying, from the data source, an alias or aliases for that entity;
ii. generating an alias string from, respectively, that alias or a combination of those aliases;
iii. generating a vector embedding of the alias string;
iv. performing an operation comprising a hash function on that vector embedding to generate an embedding hash value; and
v. storing the alias string in a bucket of the vector hash table at a memory location indicated by the embedding hash value.

A9. The computer-implemented method of clause A8, wherein, when step i results in identification of a plurality of aliases, step ii comprises:

a. determining a quantitative similarity measure for each unique pair of the plurality of aliases; and
b. for any of those quantitative similarity measures that exceeds a predetermined alias similarity threshold, discarding one of the corresponding pair of aliases before generating the alias string.

The quantitative similarity measure can be determined by string sequential matching.

A10. The computer-implemented method of either of clauses A8 or A9 as dependent on clause A2, further comprising, for each of the one or more entities, after performing step iii, storing the vector embedding in the data substructure.

A11. A computer-implemented method of updating a primary data structure generated from a primary data source using the method of clause A10, the method comprising:

generating a secondary data structure from a secondary data source using the method of clause A10;
for each vector embedding of the secondary data structure:

A. determining a distance between that secondary data structure vector embedding and each of the primary data structure vector embeddings; and
B. determining, in dependence on those distances, whether to:

I. merge the corresponding secondary data structure entry with one of the primary data structure entries; or
II. add the corresponding secondary data structure entry to the primary data structure.

A12. The computer-implemented method of clause A11, wherein:

step I comprises:

retrieving alias strings associated with the primary and secondary data structure entries to be merged;
generating a combination alias string from a combination of the retrieved primary and secondary data structure alias strings;
generating a vector embedding of the combination alias string;
performing an operation comprising a hash function on the vector embedding of the combination alias string to generate a combination hash value;
storing the combination alias string in a bucket of the primary data structure's vector hash table at a memory location indicated by the combination hash value;
storing the vector embedding of the combination alias string in the primary data structure's data substructure;
deleting the primary data structure's vector hash table entry from the primary data structure's vector hash table; and
deleting the primary data structure's data substructure entry from the primary data structure's data substructure; and

step II comprises:

retrieving an alias string associated with the secondary data structure's vector hash table entry;
storing that secondary data structure alias string in a bucket of the primary vector hash table at a memory location indicated by an embedding hash value generated by performing an operation comprising a hash function on the secondary vector hash table vector embedding; and
storing the vector embedding of that secondary data structure alias string in the primary data structure's data substructure.

A13. The computer-implemented method of clause A12, wherein generating the combination alias string comprises:

identifying one or more primary aliases comprised in the retrieved primary data structure alias string;
identifying one or more secondary aliases comprised in the retrieved secondary data structure alias string;
determining a quantitative similarity measure for each unique primary-secondary alias pair; and
for any of those quantitative similarity measures that exceeds a predetermined alias similarity threshold, discarding one of the corresponding pair of aliases before forming the combination of the retrieved primary and secondary data structure alias strings.

The quantitative similarity measure can be determined by string sequential matching.
A14. The computer-implemented method of any of clauses A11 to A13, wherein step B comprises:

retrieving a secondary data structure alias string corresponding to the secondary data structure vector embedding;
identifying one or more aliases in that secondary data structure alias string;
determining a predetermined number, k, of candidate primary data structure vector embeddings associated with the k shortest of the distances between the secondary data structure vector embedding and each of the primary data structure vector embeddings;

retrieving candidate primary data structure alias strings associated with each of those k candidate primary data structure vector embeddings;

identifying one or more aliases in each of the candidate primary data structure alias strings;

determining a quantitative similarity measure between each of the aliases identified in the secondary data structure alias string and each of the aliases identified in each of the candidate primary data structure alias strings;

determining a highest quantitative similarity measure of the k quantitative similarity measures; and

if the highest quantitative similarity measure exceeds a predetermined alias similarity threshold, then performing step I to merge the corresponding primary and secondary data structure entries; and

if the highest quantitative similarity measure does not exceed the predetermined alias similarity threshold, then performing step II.

The quantitative similarity measure can be determined by string sequential matching.

A15. The computer-implemented method of any of clauses A11 to A14, preceded by selecting the primary data source from a plurality of data sources comprising the primary and secondary data sources referred to in clause A11 in dependence on one or more of:

a number of contributors to each of the data sources;

a frequency with which each of the data sources is updated;

a lifespan of each of the data sources;

an average number of aliases per entity identified in each of the data sources; and

a number of entities identified in each of the data sources.

A16. A computer-implemented method of automatically tagging an entity token using the data structure of clause A2 or any of clauses A3 to A5 as dependent thereon,

wherein each bucket of the vector hash table also stores one or more tags; the method comprising:

vector embedding the entity token to produce a token vector;

determining a distance between the token vector and each of the data substructure vector embeddings; and

tagging the entity token using one or more of the tags, or using one or more alternative tags, in dependence on the determined distances.

Tagging can comprise adding the tag to the entity token (for example in parentheses following the entity token). Alternatively or additionally, tagging can comprise replacing the entity token with the tag. Tagging can facilitate further automatic text processing, such as summarising e.g. by replacing multiple entity tokens having the same tag with a single representative entity token.

The token vector is produced using the same ANN used to generate the vector hash table vector embeddings, or using an ANN having weights corresponding thereto.

A17. The computer-implemented method of clause A16, wherein the tagging step comprises:

determining a predetermined number, j, of candidate data substructure vector embeddings associated with the j shortest of the distances between the token vector and each of the data substructure vector embeddings;

retrieving candidate vector hash table alias strings associated with each of those j candidate data substructure vector embeddings;

identifying one or more aliases in each of the candidate vector hash table alias strings;

determining a quantitative similarity measure between the entity token and each of those identified aliases;

determining a highest quantitative similarity measure of those determined quantitative similarity measures; and

if the highest quantitative similarity measure exceeds a predetermined token-alias similarity threshold, then tagging the entity token using one or more of the one or more corresponding tags; and

if the highest quantitative similarity measure does not exceed the predetermined token-alias similarity threshold, then tagging the entity token using one or more of the one or more alternative tags.

The quantitative similarity measure can be determined by string sequential matching.

A18. The computer-implemented method of either of clauses A16 or 1A7, wherein the one or more tags stored in each bucket of the vector hash table comprise an entity type label.

A19. The computer-implemented method of any of clauses A16 to A18, wherein the one or more tags stored in each bucket of the vector hash table comprise a standardised entity name.

A20. The computer-implemented method of clause A19, wherein the alternative tag is an additional standardised entity name based on the entity token, the method further comprising adding an entry to the data structure by:

performing an operation comprising a hash function on the token vector to generate a token hash value;
storing the entity token in a bucket of the vector hash table at a memory location indicated by the token hash value; and
storing the token vector in the data substructure.

A21. The computer-implemented method of any of clauses A16 to A20 as dependent on clause A5, further comprising a precursor process of:

performing an operation comprising a hash function on the entity token to generate a token hash value;
looking up the token hash value in the tag hash table;
when looking up the token hash value yields a null result, proceeding to perform the method of any of clauses A16 to A20; and
when looking up the token hash value yields a non-null result, tagging the entity token using that result and not proceeding to perform the method of any of clauses A16 to A20.

A22. A computer-implemented method of automatically tagging a data set, the method comprising:

separating the data set into a plurality of text tokens;
identifying one or more entity tokens amongst the plurality of text tokens; and
tagging each entity token according to the method of any of clauses A16 to A21 to produce a tagged data set.

A23. A computer-implemented method of training a named entity recognition, 'NER', machine learning, 'ML', model, the method comprising:

performing the method of clause A22 to produce a tagged data set; and
training the NER ML model on the tagged data set to produce a trained NER ML model.

A24. A computer-implemented method of generating a zero-shot NER ML model, the method comprising:

performing the method of clause A23; and
converting the trained NER ML model to a zero-shot NER ML model.

A25. An NER ML model produced according to the method of either of clauses A23 or A24.
A26. A computer-implemented method of automatically tagging an entity token, the method comprising inputting the entity token into the NER ML model of clause A25.
A27. A computer-implemented method of automatically tagging a further data set, the method comprising:

separating the further data set into a further plurality of text tokens;
identifying one or more further entity tokens amongst the further plurality of text tokens; and
tagging each further entity token according to the method of clause A26 to produce a further tagged data set.

A28. The computer-implemented method of either of clauses A22 or A27, wherein the data set and, when dependent on clause A27, the further data set, relate to network security and/or management.
A29. A computer-implemented method of generating a knowledge graph, the method comprising:

performing the computer-implemented method of any of clauses A22, A27, or A28; then
generating a knowledge graph based on the tagged data set and/or, when dependent directly or indirectly on clause A27, the further tagged data set.

A30. A knowledge graph generated by performing the computer-implemented method of clause A29.
A31. A computer-implemented method of configuring a network comprising:

performing the method of clause A28, or clause A29 as dependent thereon;
determining a network configuration action based on the tagged data set, and/or, when dependent on clause A27, the tagged further data set, and/or, when dependent on clause A29, the knowledge graph; and
causing the network configuration action to be performed.

A32. A data processing system configured to perform the method of any of clauses A8 to A24, A26 to A29, or A31.

A33. A computer program comprising instructions which, when the program is executed by a computer, cause the computer to carry out the method of any of clauses A8 to A24, A26 to A29, or A31.

A34. A computer-readable data carrier having stored thereon the computer program of clause A33.

A35. A data carrier signal carrying the computer program of clause A33.

B1. A data structure comprising:

> a hash table, referred to herein as an 'embedding hash table', consisting of one or more buckets, wherein:

>> for each bucket of the embedding hash table, a corresponding key is a vector embedding of an entity name; and each bucket of the embedding hash table stores an entity type label associated with the corresponding entity name; and

> a data substructure storing all of the keys to the embedding hash table.

The data substructure can be a database.

B2. The data structure of clause B1, wherein each vector embedding is generated using an artificial neural network, 'ANN', optionally a hardware ANN, optionally an ANN trained on data relating to network security and/or management, optionally an ANN which performs deterministic vector embedding.

B3. The data structure of either of clauses B1 or B2, wherein each entity relates to network security and/or management.

B4. The data structure of any of clauses B1 to B3, further comprising a hash table, referred to herein as a 'name hash table', wherein:

> for each bucket of the name hash table, a corresponding key is an entity name; and each bucket of the name hash table stores an entity type label associated with the corresponding entity name.

The data structure can be configured for use in a computer-implemented method of configuring a network.

B5. A computer-readable data carrier having stored thereon the data structure of any of clauses B1 to B4.

B6. A data carrier signal carrying the data structure of any of clauses B1 to B3.

B7. A computer-implemented method of automatically labelling an entity token using the data structure of any of clauses B1 to B4, the method comprising:

> vector embedding the entity token to produce a token vector;
> calculating a respective distance between the token vector and each of the keys in the data substructure; and
> labelling the entity token with one of the entity type labels stored in the embedding hash table, or as 'unknown', in dependence on those distances.

The token vector is produced using the same ANN used to generate the embedding hash table vector embeddings, or using an ANN having weights corresponding thereto.

B8. The computer-implemented method of clause B7 as dependent on clause B4, further comprising: determining whether any of the distances are lower than a predetermined threshold, wherein:

> if not, the labelling step comprises labelling the entity token as 'unknown'; and
> if so:

>> generating a set of variations of the entity token in accordance with one or more predetermined rules;
>> searching the name hash table using one or more of the set of variations; and

labelling the entity token with an entity type label returned by the searching or, if the searching returns no results, labelling the entity token as 'unknown'.

Labelling can comprise adding a label to the entity token (for example in parentheses following the entity name). Alternatively or additionally, labelling can comprise replacing the entity token with a label.

B9. The computer-implemented method of either of clauses B7 or B8 as dependent on clause B4, further comprising a precursor process of:

> performing an operation comprising a hash function on the entity token to generate a token hash value;
> looking up the token hash value in the name hash table;

when looking up the token hash value yields a null result, proceeding to perform the method of either of clauses B7 or B8; and
when looking up the token hash value yields a non-null result, labelling the entity token using that result.

B10. A computer-implemented method of automatically labelling a data set, the method comprising:

separating the data set into a plurality of text tokens;
identifying one or more entity tokens amongst the plurality of text tokens; and
labelling each entity token according to the method of any of clauses B7 to B9 to produce a labelled data set.

B11. A computer-implemented method of training a named entity recognition, 'NER', machine learning, 'ML', model, the method comprising:

performing the method of clause B10 to produce a labelled data set; and
training the NER ML model on the labelled data set to produce a trained NER ML model.

B12. A computer-implemented method of generating a zero-shot NER ML model, the method comprising:

performing the method of clause B11; and
converting the trained NER ML model to a zero-shot NER ML model.

B13. An NER ML model produced according to the method of either of clauses B11 or B12.
B14. A computer-implemented method of automatically labelling an entity token, the method comprising inputting the entity token into the NER ML model of clause B13.
B15. A computer-implemented method of automatically labelling a further data set, the method comprising:

separating the further data set into a further plurality of text tokens;
identifying one or more further entity tokens amongst the further plurality of text tokens; and
labelling each further entity token according to the method of clause B14 to produce a further labelled data set.

B16. The computer-implemented method of either of clauses B10 or B15, wherein the data set and, when dependent on clause B15, the further data set, relate to network security and/or management.
B17. A computer-implemented method of generating a knowledge graph, the method comprising:

performing the computer-implemented method of any of clauses B10, B15, or B16; then
generating a knowledge graph based on the labelled data set and/or, when dependent directly or indirectly on clause B15, the further labelled data set.

B18. A knowledge graph generated by performing the computer-implemented method of clause B17.
B19. A computer-implemented method of configuring a network comprising:

performing the method of clause B16, or clause B17 as dependent thereon;
determining a network configuration action based on the labelled data set, and/or, when dependent on clause B15, the labelled further data set, and/or, when dependent on clause B17, the knowledge graph; and
causing the network configuration action to be performed.

B20. A computer-implemented method of generating the data structure of any of clauses B1 to B4, the method comprising:

obtaining a data source;
identifying one or more entities referred to in the data source by an entity name and a corresponding entity type label; and
for each of those one or more entities:

generating a vector embedding of the entity name and storing the vector embedding in the data substructure;
performing an operation comprising a hash function on that vector embedding to generate an embedding hash value; and
storing the entity type label in a bucket of the embedding hash table at a memory location indicated by the embedding hash value.

B21. The computer-implemented method of clause B20 as dependent on clause B4, wherein the data source obtained in the method of clause B20 is a primary data source of a sequence of two or more data sources, the method further comprising:

> A. obtaining a next data source of the sequence or, when there is no next data source, terminating the method;
> B. identifying one or more entities referred to in that data source by an entity name and a corresponding entity type label; and
> C. for each of those one or more entities:
>
> > I. looking up the entity name in the name hash table;
> > II-a. when step I yields a non-null result, performing step I for a next entity of the one or more entities or, if step I has been performed for all of the one or more entities, returning to step A;
> > II-b. when step I yields a null result:
> >
> > > i. generating a vector embedding of the entity name;
> > > ii. storing the vector embedding in the data substructure;
> > > iii. performing an operation comprising a hash function on that vector embedding to generate an embedding hash value; and
> > > iv. storing the entity type label in a bucket of the embedding hash table at a memory location indicated by the embedding hash value;
> > > v. calculating a respective distance between that vector embedding and each of the keys in the data substructure;
> > > vi. determining whether a shortest one of those distances is above a threshold distance and, only if it is:
> > >
> > > > α. performing an operation comprising a hash function on the entity name to generate a name hash value; and
> > > > β. storing the entity type label in a bucket of the name hash table at a memory location indicated by the name hash value;
> > >
> > > then
> > > vii. returning to step A.

B22. The computer-implemented method of clause B21, preceded by determining an order of the sequence of the two or more data sources in dependence on one or more of:

> a number of contributors to each of the data sources;
> a frequency with which each of the data sources is updated;
> a lifespan of each of the data sources;
> an average number of aliases per entity identified in each of the data sources; and
> a number of entities identified in each of the data sources.

B23. A data processing system configured to perform the method of any of clauses B7 to B12, B14 to B17, or B19 to B22.
B24. A computer program comprising instructions which, when the program is executed by a computer, cause the computer to carry out the method of any of clauses B7 to B12, B14 to B17, or B19 to B22 .
B25. A computer-readable data carrier having stored thereon the computer program of clause B24.
B26. A data carrier signal carrying the computer program of clause B24.

## BRIEF DESCRIPTION OF THE FIGURES

Aspects of the present disclosure will now be described by way of example with reference to the accompanying figures. In the figures:

> Figure 1 illustrates a first example data structure;
> Figure 2 illustrates an example computer-implemented method of generating the first example data structure;
> Figure 3 illustrates an example computer-implemented method of generating an alias string;

Figure 4 illustrates an example computer-implemented method of updating the first example data structure;

Figure 5A illustrates an example computer-implemented method for merging entries from primary and secondary versions of the first example data structure;

Figure 5B illustrates an example computer-implemented method for adding an entry from a secondary version of the first example data structure to a primary version of the first example data structure;

Figure 6 illustrates an example computer-implemented method for generating a combination alias string;

Figure 7 illustrates an example computer-implemented method which makes use of the first example data structure;

Figure 8 illustrates an example computer-implemented method of training and using an NER ML model;

Figure 9 illustrates an example result of using the data set tagging methods described herein in relation to the first example data structure;

Figure 10 illustrates a second example data structure;

Figure 11 illustrates an example computer-implemented method of generating the second example data structure;

Figure 12 illustrates another example computer-implemented method of generating the second example data structure;

Figure 13 illustrates an example computer-implemented method which makes use of the second example data structure;

Figure 14 illustrates an example result of using the data set tagging methods described herein in relation to the second example data structure;

Figure 15 schematically illustrates an example data processing system;

Figure 16 schematically illustrates an example ML module; and

Figure 17 schematically illustrates an example restricted Boltzmann machine.

## DETAILED DESCRIPTION

One ML technique which can be employed in the methods described below is known as 'word/vector embedding'. Word embedding transforms words in a vocabulary into a set of vectors consisting of real numbers. The reason for this process is to allow a machine to represent a meaning of a word in relation to other words. Unlike a human, a machine does not know the meaning of a word, but it can work with vector representations of words to represent the meaning of a word.

In general, vector embeddings can be generated from the hidden layers of a neural network, or from the output of the middle layer of a neural network. For example, one method of converting words into vectors is known as 'Word2Vec'. Word2Vec is a collection of models for representing words in a corpus of text as a collection of vectors denoting how similar they are to each other depending on sentence context. It involves training a neural network to associate words with each other depending on where they lie within a context. The neural network itself (specifically its weight matrix) is the word embedding and it can be used to predict the context of a given word which appeared in the corpus.

It is proposed herein to make use of vector embeddings to automatically identify entity aliases (i.e. different strings used to refer to the same entity), based on an assumption that vector embeddings of aliases for a single entity are close together in embedding space, since a vector embedding of a word encodes it as a vector in such a way that words that are closer in the embedding space are similar in meaning.

Data structures are employed which enable associations to be made between vector embeddings of a plurality of entity representations (e.g. entity names such as 'Emissary Panda') and tags for those entity representations (e.g. standardised entity names, such as 'APT 27'; and/or entity type labels, such as 'malware').

The data structures described herein each comprise one or more hash tables. Hash tables store data in buckets at indexed memory locations. The indices are the result of hashing (i.e. performing a particular type of mathematical operation comprising a hash function on) corresponding keys. Thus a hash table can be thought of, from an informational content perspective, as a two column table, associating keys with bucket contents. Searching a hash table for a particular string is very fast since it requires only a single operation (hashing the string to generate a look-up key).

A first example data structure comprises a 'vector hash table' which stores a set of entity representations in its buckets, optionally together with one or more corresponding tags such as an entity type label and/or a standardised entity name, and uses vector embeddings of those entity representations as the keys. The entity representations are 'alias strings' formed by combining together all known aliases for each entity (e.g. 'APT 27,APT#27,PAT27,Emissary Panda'). This first data structure can optionally further comprise a 'tag hash table' which uses standardised entity names as the keys and stores tags such as entity type labels in its buckets.

In order to construct such a first data structure, input data from a primary data source is processed to extract all the aliases for each entity identified in that data source and group those extracted aliases together into bins. All of the aliases for each entity are then combined into an alias string which is then vector embedded to populate a primary vector hash table. If any secondary data sources are available, then their hash tables can be merged into the primary hash tables using an algorithm predicated on an assumption that vector embeddings of aliases for a single entity are close together in embedding space. The resulting data structure can be used for labelling new data using a similar algorithm.

A second example data structure comprises an 'embedding hash table' which uses vector embeddings of entity names as the keys and stores entity type labels in its buckets. The second data structure further comprises a data substructure storing the keys to the embedding hash table.

In order to correctly label entities referred to by slight variations of the names appearing in the embedding hash table, the token (word or phrase) to be labelled is vector embedded. The distance (e.g. the Euclidean distance) between that vector embedding and each of the vector embeddings stored in the embedding hash table is then calculated. The entity type label associated with the vector embedding closest to that of the token's vector embedding can then be used to label the token, optionally subject to the distance between the vector embeddings being below a predetermined threshold (the token can be labelled as 'other' if not).

This second data structure can optionally further comprise a 'name hash table' which uses entity names as the keys and stores entity type labels in its buckets. This can be used to pre-screen tokens, so that where a token is an exact match for a known entity name there is no need to vector embed it. Such a name hash table can also be used in a further test to ensure that the closest vector embedding to the token's vector embedding is actually representative of the same entity (or, in a variation, to choose between multiple vector embeddings within a threshold distance of the token's vector embedding). This involves generating variations of the token according to common types of typographical error and nomenclature options, so that those variations can then all be plugged into the name hash table until a hit is found (or not, in which case the token is labelled as 'other').

Both of the abovementioned data structures can be used to perform NER to label data directly, or can be used to generate labelled data sets to train an NER ML model. Such a model can be converted to zero-shot so that it can label previously unknown entities.

The binning used to generate the first data structure allows it to deduplicate dissimilar aliases for the same entity such as 'APT 27' and 'Emissary Panda', whereas the second data structure can only identify aliases resulting from minor nomenclature variations such as 'APT#27' and typographical errors such as 'PAT27'. This gives the first data structure an advantage over the second in the context of directly performing NER. However, for the same reason, the second data structure is better suited to generating training data for an NER ML model, since it treats distinct aliases such as 'APT 27' and 'Emissary Panda' as separate entities so can provide more variation to the model.

Each vector embedding can be generated using an artificial neural network (ANN), optionally a hardware ANN, optionally an ANN trained on relevant data, such as data relating to network security and/or management where the data structure being generated or used concerns such a field. The vector embedding process can be deterministic or non-deterministic. Deterministic vector embedding, i.e. such that vector embedding the same token always produces the same vector, can increase the efficiency of some of the methods described below versus non-deterministic vector embedding. Vector embedding can for example be achieved by training a fully connected neural network with a single hidden layer smaller than input and output layers. The neural network can for example be trained using stochastic gradient descent and backpropagation.

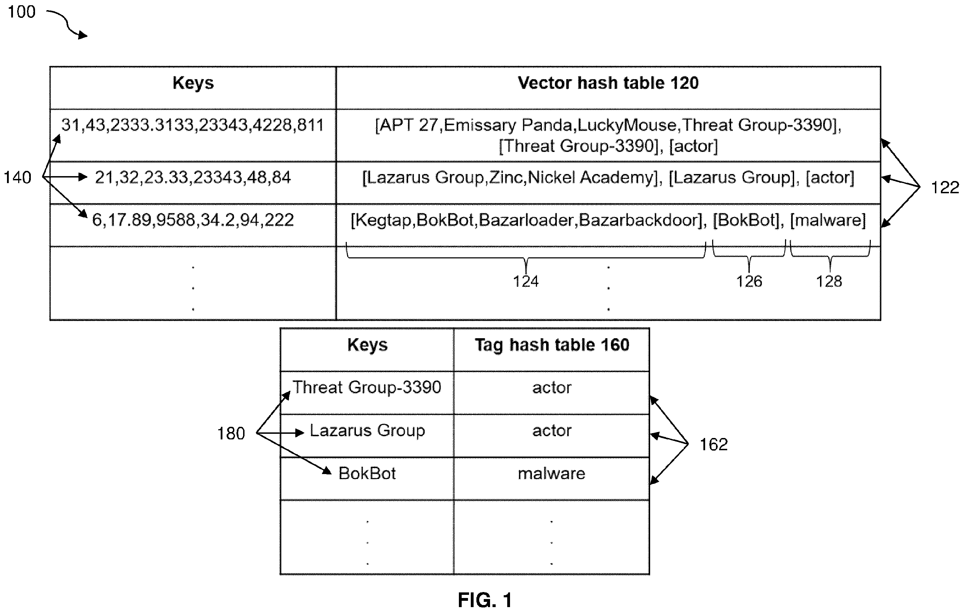

Figure 1 illustrates an example of the first data structure referred to above, which can for example be configured for use in a computer-implemented method of configuring a network such as a computer network or a telecommunications network. This data structure 100 comprises a vector hash table 120 consisting of buckets 122. Each bucket 122 of the vector hash table 120 stores an 'alias string' 124 which comprises one or more aliases for a particular entity. In the example of Figure 1, the entities relate to computer network security. In other examples, the entities could relate to telecommunications network management or other technical fields. In the example of Figure 1, the alias string is a concatenation of aliases separated by commas (such that individual aliases can be identified later if required). In other examples, the aliases could be combined in other ways, for example a different character or string could be used as a separator.

Each bucket 122 of the vector hash table 120 can also optionally store one or more tags. In the example of Figure 1 each bucket 122 stores a standardised entity name 126 for the entity referred to by the aliases in that bucket's alias string 124, and an entity type label 128 for that entity. In this example, each of the alias string 124, the standardised entity name 126, and the entity type label 128 are surrounded by square brackets. The tags 126, 128 are appended to the alias string 124 and separated from the alias string 124, and from each other, by a comma followed by a space. Other ways of incorporating tags into the vector hash table could be employed, for example the alias string and tags could be arranged in a different order and/or a different character or string could be used as a separator.

The keys to the vector hash table, which are vector embeddings of the corresponding alias strings, are shown at 140. Some of the methods described herein can be performed without the keys 140 being stored, while others require access to the keys, in which case the data structure 100 can conveniently comprise the keys 140, for example stored in a data substructure such as a database (e.g. a vector database), or a file in a suitable format (e.g. TXT, JSON, or CSV).

The data structure 100 can optionally further comprise a tag hash table 160 consisting of buckets 162. For each bucket of the tag hash table 160, a corresponding key 180 is a standardised entity name. Each bucket 162 of the tag hash table 160 stores a tag associated with the entity referred to by its key. In the example of Figure 1, those tags are entity type labels. As for the vector hash table, if access to the keys of the tag hash table is required then they can be stored in a data substructure of the data structure 100, such as a database or a file in a suitable format.

The tag hash table 160 is constructed by, for each standardised entity name-tag combination, performing an operation comprising a hash function on the standardised entity name, and storing the corresponding tag at a memory location indicated by the result of that operation. (Depending on the processes which make use of the data structure 100, it may not be necessary to store tags in both the vector hash table 120 and a separate tag hash table 160. A suitable balance between storage requirements for storing multiple copies of the same information, and computing resource requirements to access that information when needed, should be struck depending on the specific application.)

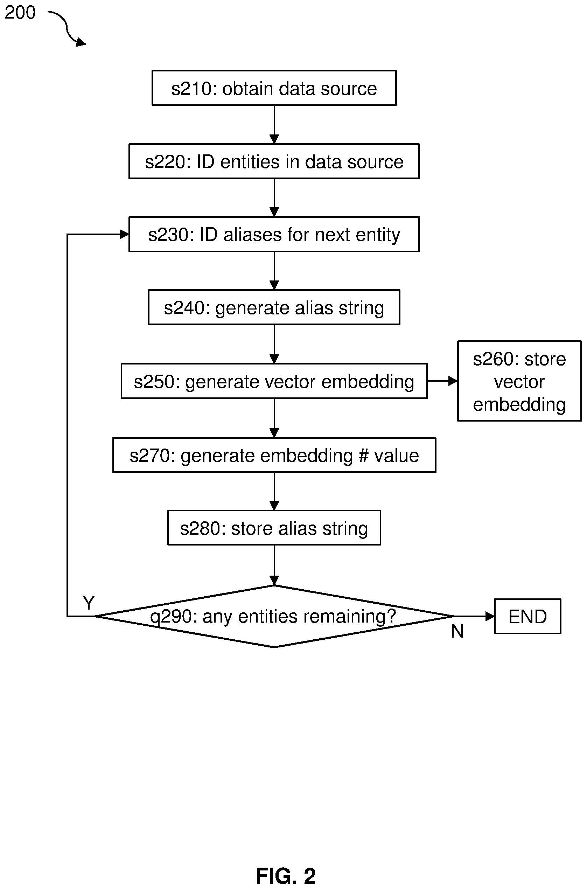

Figure 2 illustrates an example computer-implemented method 200 of generating the data structure 100 of Figure 1. At step s210 a data source is obtained. For example, the 'MITRE ATT&CK' framework is an online knowledge base that outlines the tactics, techniques, and procedures (TTPs) used by threat actors during cyber-attacks. It provides a structured list of threat entities. Another example data source is 'Malpedia', which is a collaborative online encyclopaedia and repository of knowledge about malware and malicious software curated by a community of cybersecurity experts, researchers, and analysts. Malpedia publishes a table of cybersecurity threat actors comprising links to pages detailing each actor, each page including a list of known aliases. Obtaining a data source can thus comprise accessing, and optionally downloading, e.g. either the MITRE ATT&CK threat entities list, or the Malpedia threat actors table and linked webpages.

At step s220 one or more entities referred to in the data source are identified. (The data source may explicitly indicate entities, or known entity recognition techniques can be employed, for example statistical techniques e.g. using hidden Markov models, 'HMMs' or conditional random fields, 'CRFs'.) The flow from step s230 to query q290 is then enacted for each of those identified entities. At step s230, one or more aliases for the entity are identified from the data source. (The data source may explicitly indicate aliases, or they can be inferred using known techniques such as by querying a large language model, 'LLM'.) Then, at step s240, an alias string 124 is generated from, respectively, that alias or a combination of those aliases. At step s250 a vector embedding 140 of the alias string is generated. That vector embedding is optionally stored in the data substructure at step s260. At step s270 an operation comprising a hash function is performed on that vector embedding to generate an embedding hash value. At step s280 the alias string is then stored in a bucket 122 of the vector hash table 120 at a memory location indicated by the embedding hash value. Finally, query q290 determines whether there are any entities remaining to be processed. If so, the flow loops back to step s230. If not, the process ends.

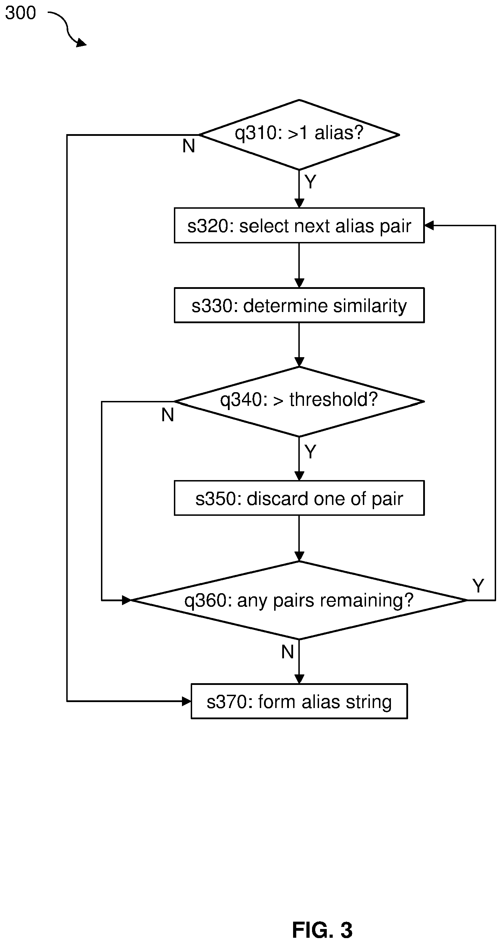

Figure 3 illustrates an example computer-implemented method 300 of generating an alias string 124, for example as is performed at step s240 of Figure 2. According to the method 300 slight variations of aliases are not stored, to reduce memory requirements without significantly impacting entity recognition accuracy in processes which make use of the data structure 100.

At query q310 it is determined whether a plurality of aliases has been identified for the current entity. If not, the flow proceeds directly from query q310 to step s370 of forming the alias string, which in this case is based on the sole alias identified. If query q310 determines that a plurality of aliases have been identified, then each unique pair of the plurality of aliases is processed as follows.

At step s320, a next unique pair of the plurality of aliases is selected. A quantitative similarity measure for that pair is then determined at step s330. The quantitative similarity measure can for example be determined by string sequential matching. At query q340 it is determined whether that quantitative similarity measure exceeds a predetermined alias similarity threshold, for example 90%. If so, then one of the pair is discarded at step s350 before the flow moves on to check whether any unique pairs remain at query q360. For example, the longer alias of the pair can be discarded to maximise the memory reduction benefit. Alternatively, if data indicating relative popularity of aliases is available, then the least commonly used alias of the pair can be discarded to improve the efficiency of entity recognition/tagging processes etc. which make use of the data structure 100. If the quantitative similarity measure does not exceed the alias similarity threshold, then the flow proceeds directly from query q340 to query q360. Either way, if any unique pairs do remain, then the flow returns to step s320. If not, then the alias string is formed at step s370. If a sole alias remains at this point, then the alias string is formed based on that alias alone, otherwise the alias string is formed by combining all the non-discarded aliases identified for the current entity.

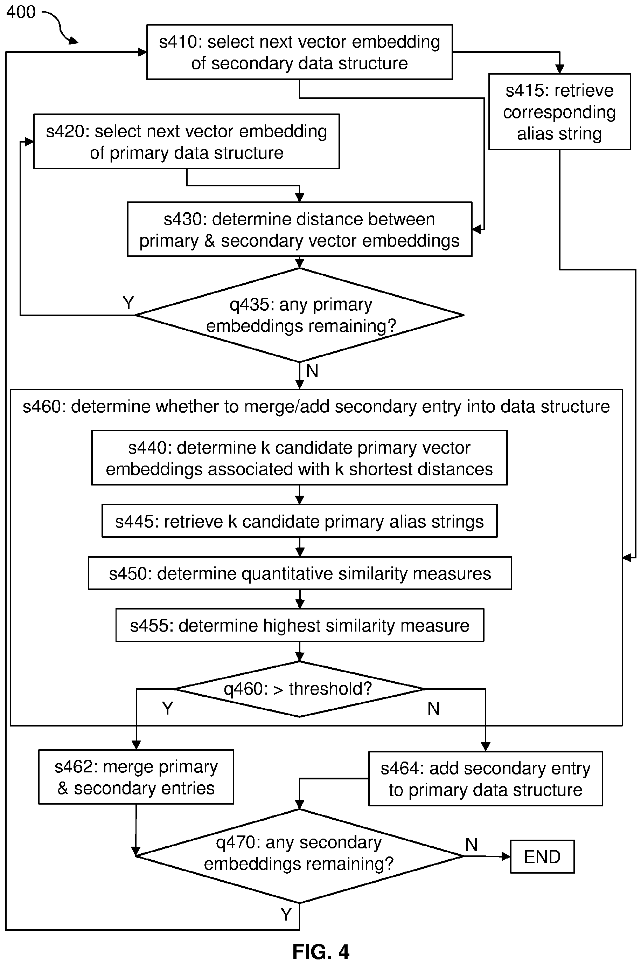

Figure 4 illustrates an example computer-implemented method 400 of updating a primary data structure generated from a primary data source, based on a secondary data structure. According to the method 400, entries from the primary and secondary data structures are merged, where appropriate, to reduce the overall memory required to store them without significantly impacting the accuracy of entity recognition and tagging methods based on the combined data structure.

The primary and secondary data structures can both be generated in the same way, for example according to the method of Figure 2. The operation comprising a hash function performed on the vector embeddings at step s270 to store the alias strings in the vector hash tables can be the same in both cases, or can be different. All that is required for search of the hash tables (and thus retrieval of their bucket contents) is knowledge of what that operation is for each hash table.

According to the method 400, each of the vector embeddings of the secondary data structure is processed as follows.

At step s410 the next vector embedding of the secondary data structure is selected. Then, at step s415, the corresponding alias string is retrieved from the secondary data structure by performing the same hash-based operation on the vector embedding that was used to store the alias string in the vector hash table of the secondary data structure. Alternatively, the method 400 could be performed in conjunction with the method 200 of generating the secondary data structure, for example with steps s420 to s462/s464 (which will be described below) being performed at some point between step s250 and query q290 of the method 200; i.e. after generation of the alias string and vector embedding associated with each entity, before moving onto the next entity.

Each of the vector embeddings of the primary data structure is compared to the selected vector embedding of the secondary data structure as follows. At step s420 the next vector embedding of the primary data structure is selected. Then, at step s430, the distance between that primary vector embedding and the selected secondary vector embedding is determined, for example by calculating the Euclidean distance between them. At query q435 it is determined whether there are any primary vector embeddings remaining to be processed. If so, the flow loops back to step s420. If not, the flow continues to step s460 where it is determined, in dependence on the calculated distances, whether to merge the corresponding secondary data structure entry with one of the primary data structure entries at step s462, or add the corresponding secondary data structure entry to the primary data structure at step s464.

Step s460 can for example comprise sub-step s440 to query q460. At sub-step s440, a predetermined number, k (e.g. 2 or 3), of candidate primary data structure vector embeddings associated with the k shortest of the distances between the secondary data structure vector embedding and each of the primary data structure vector embeddings are determined. Then, at sub-step s445, candidate primary data structure alias strings associated with each of those k candidate primary data structure vector embeddings are retrieved by performing the same hash-based operation on the vector embeddings that was used to store the alias strings in the vector hash table of the primary data structure. Next, at sub-step s450, a quantitative similarity measure between each of the aliases in the retrieved secondary data structure alias string and each of the aliases in the k retrieved candidate primary data structure alias strings is determined. The quantitative similarity measure can for example be determined by string sequential matching. A highest quantitative similarity measure of those quantitative similarity measures is then determined at sub-step s455 and is tested against a predetermined alias similarity threshold (e.g. 90%) at query q460. If the highest quantitative similarity measure exceeds that threshold, then step s462 is performed to merge the corresponding primary and secondary data structure entries. If not, then step s464 is performed to add the corresponding secondary data structure entry to the primary data structure.

The choice of k is a balance between the tendency of a higher value of k to result in more data structure entries being merged, and the additional time and computing resources required to perform sub-steps s440 to s455. (Step s455 is not required at all if k is 1.)

After one of steps s462 and s464 has been performed, the flow proceeds to query q470, where it is determined whether there are any secondary data structure vector embeddings remaining to be processed. If so, the flow loops back to step s410. If not, the process ends. The process 400 can optionally be repeated for further secondary data structures if/when they become available.

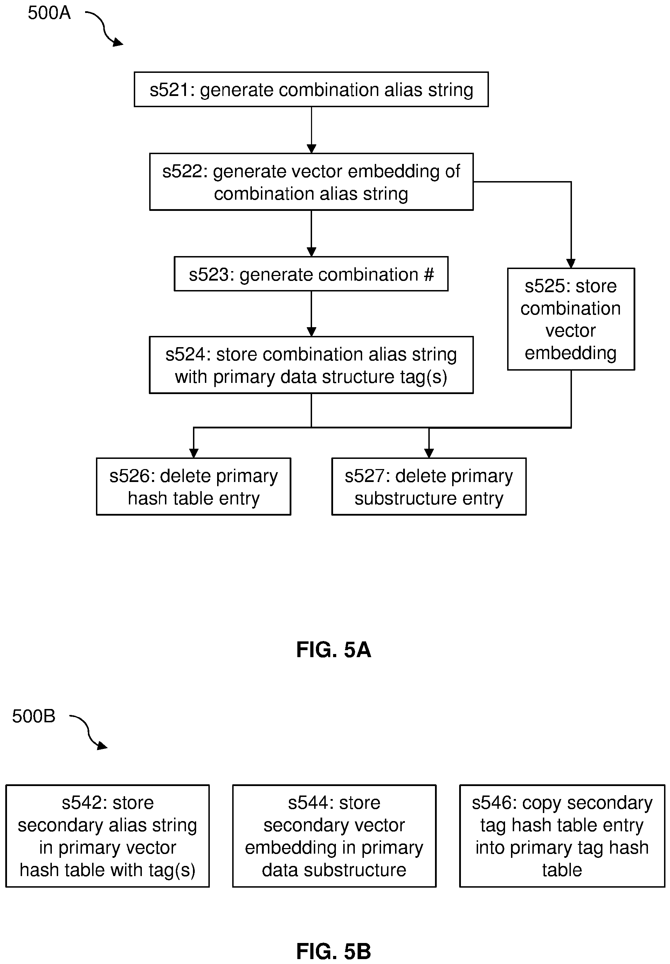

Figure 5A illustrates an example computer-implemented method 500A for merging primary and secondary data structure entries, for example as may be used to perform step s462 of Figure 4. At step s521, a combination alias string is generated from a combination of the primary and secondary data structure alias strings. Then a vector embedding of that combination alias string is generated at step s522 using the same ANN used to generate the vector hash table vector embeddings at step s250 of Figure 2, or using an ANN having weights corresponding thereto. Next, at step s523, an operation comprising a hash function is performed on the vector embedding of the combination alias string to generate a combination hash value. (That operation is the same operation used to store the alias strings in the vector hash table of the primary data structure when it was generated.) Then, at step s524, the combination alias string is stored in a bucket of the primary data structure's vector hash table at a memory location indicated by the combination hash value. If the primary vector hash table comprises tags, then any tags associated with the primary data structure alias string are stored together with the combination alias string. The vector embedding of the combination alias string is also stored in the primary data structure's data substructure at step s525. Finally, the primary data structure's vector hash table entry is deleted from the primary data structure's vector hash table at step s526, and the primary data structure's data substructure entry is deleted from the primary data structure's data substructure at step s527. Note that, if the primary data structure comprises a tag hash table, there is no need to update it when merging entries from the primary and secondary data structures since tags derived from the primary data source take precedence over tags derived from the secondary data source. Accordingly, any tags associated with the secondary data structure alias string (whether stored in the secondary data structure's vector hash table or tag hash table) are discarded.

Figure 5B illustrates an example computer-implemented method 500B for adding a secondary data structure entry to a primary data structure, for example as may be used to perform step s464 of Figure 4. At step s542 the secondary data structure alias string is stored in a bucket of the primary vector hash table at a memory location indicated by an embedding hash value generated by performing an operation comprising a hash function on the secondary vector hash table vector embedding. (That operation is the same operation used to store the alias strings in the vector hash table of the primary data structure when it was generated.) If the primary and secondary vector hash tables comprise tags, then any tags associated with the secondary alias string are stored along with it in the primary vector hash table. At step s544, the vector embedding of that secondary data structure alias string is stored in the primary data structure's data substructure. If the primary and secondary data structures comprise tag hash tables, then the secondary tag hash table entry associated with the secondary alias string is copied into the primary tag hash table at step s546. This can for example be achieved by extracting the standardised entity name from a vector hash table (either the secondary vector hash table at any time, or the primary vector hash table after step s542 has been performed), using it to retrieve the associated entity type label from the secondary tag hash table, performing the operation comprising a hash function used to generate the primary tag hash table on the standardised entity name, and storing the entity type label at a memory location indicated by the result of that operation.

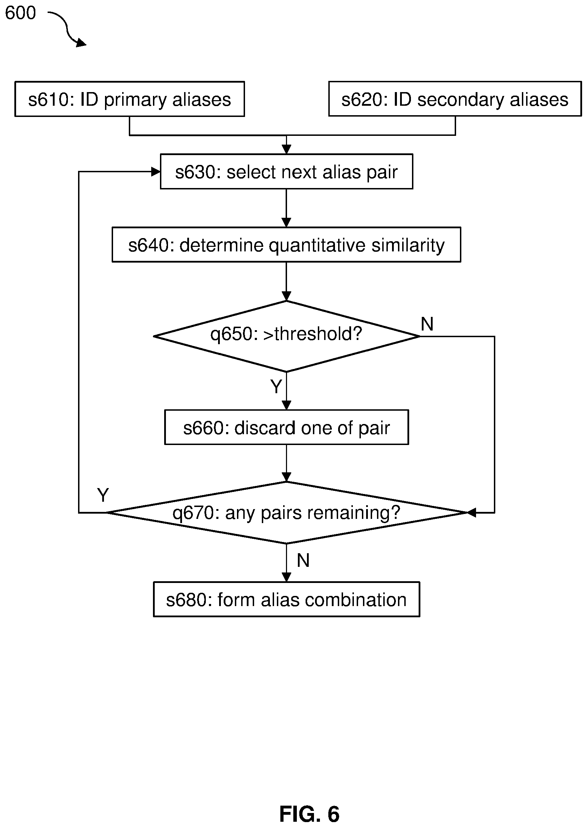

Figure 6 illustrates an example computer-implemented method 600 for generating a combination alias string, for example as may be used to perform step s521 of Figure 5A. At step s610 one or more primary aliases comprised in the primary data structure alias string are identified. Similarly, at step s620 one or more secondary aliases comprised in the secondary data structure alias string are identified. Steps s610 and s620 can for example make use of separators incorporated in the alias strings when they were generated, e.g. the commas used in the alias strings 124 of Figure 1. Each unique primary-secondary alias pair (i.e. each consisting of a unique combination of one alias identified in the primary data structure alias string and one alias identified in the secondary data structure alias string) is then processed as follows.

At step s630 a next unique primary-secondary alias pair is selected then, at step s640, a quantitative similarity measure for it is determined. That quantitative similarity measure can for example be determined by string sequential matching. The quantitative similarity measure is compared to a predetermined alias similarity threshold at query q650. If it exceeds that threshold, one of the corresponding pair of aliases is discarded at step s660 before the flow proceeds to query q670. For example, the secondary alias of the pair can be discarded, in particular if the primary data source has been selected from a plurality of data sources as described below. Alternatively, some other criterion/criteria can be used to determine which alias to discard, e.g. the longer of the two aliases can be discarded to reduce memory requirements. If the quantitative similarity measure does not exceed the alias similarity threshold, then the flow proceeds directly from query q650 to query q670. At query q670 it is determined whether any unique primary-secondary alias pairs remain. If so, the flow loops back to step s630. If not, a combination of the primary and secondary data structure alias strings is formed at step s680, for example in a similar manner to formation of the primary and secondary alias strings (e.g. by concatenation, with a comma as a separator).

A primary data source can be selected from a plurality of data sources for use in the method 400 of Figure 4 on an arbitrary basis, or according to some metric. For example, the primary data source can be selected in dependence on one or more of the following factors.

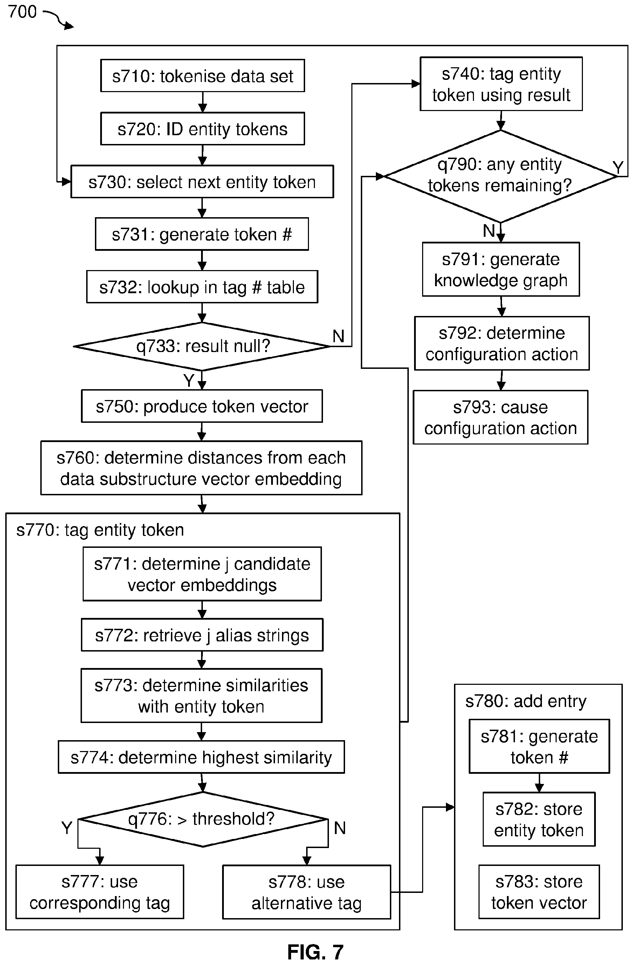

- A number of contributors to each of the data sources
  For example, a higher number of contributors could be deemed indicative of higher reliability, this therefore being a factor weighing in favour of selection as the primary data source.
- A frequency with which each of the data sources is updated
  For example, a higher update frequency could be deemed indicative of higher accuracy, this therefore being a factor weighing in favour of selection as the primary data source.
- A lifespan of each of the data sources
  For example, a longer lifespan could be deemed indicative of higher reliability, this therefore being a factor weighing in favour of selection as the primary data source.
- An average number of aliases per entity identified in each of the data sources For example, a higher number of aliases per entity could be deemed indicative of a more sophisticated construction, this therefore being a factor weighing in favour of selection as the primary data source. A higher number of aliases per entity in the primary data source also reduces the time and computing resources required to merge a secondary data structure with the primary data structure per the method 400 of Figure 4, in particular the number of repetitions of steps s420 and s430 and query q435 required, this therefore being a factor weighing in favour of selection as the primary data source.
- A number of entities identified in each of the data sources
  For example, a higher number of entities could be deemed indicative of higher informational content, this therefore being a factor weighing in favour of selection as the primary data source in one respect. A higher number of entities in the primary data source increases the likelihood of entries in the secondary data structure being merged with those already in the primary data structure per step s462 of Figure 4, as opposed to being added to it per step s464, resulting in fewer entries in the combined data structure. If the methods 500A and 500B of Figures 5A and 5B are respectively used to perform those steps then merging is a slower, more computing resource-intensive process than adding, so a higher number of entities in the primary data source tends to increase the time and computing resources required to combine primary and secondary data structures, this therefore being a factor weighing against selection as the primary data source in this respect. However, fewer entries in the combined data structure reduces the memory required to store the combined data structure as well as the time and computing resources required to perform methods of using the combined data structure such as the method 700 of Figure 7 described below. In particular, any steps involving comparison with each entry in the data structure would be faster, e.g. step s760 where distances of a token vector from each vector embedding in the combined data structure are determined. Thus a higher number of entities is a factor weighing in favour of selection as the primary data source in this respect, especially where efficient use of the combined data structure is considered higher priority than efficient generation of the combined data structure.

Other factors such as source reputation can also be considered. An example metric which can be used to select the primary data source, with the data source having the highest value of O being selected, is:

$$O = SR + NC + v + QD$$

based on the following quantities.

- Source reputation

$$SR = 1 - \frac{r}{n}$$

where r is the data source rank and n is the total number of data sources.

- Normalised number of contributors

$$NC = \frac{n_c}{n_c''}$$

where $n_c$ is the number of contributors to the data source and $n_c''$ is the highest number of contributors to any of the data sources.

- Update frequency measure

$$v = \frac{N_{update}}{Tot_{update}} + (1 - \frac{N_{mon\_update}}{L_{update}})$$

where:

- $N_{update}$ is the number of updates to the data source in the last 12 months;
- $Tot_{update}$ is the total number of updates to the data source so far;
- $N_{mon\_update}$ is the number of months from the last update to the data source; and
- $L_{update}$ is the lifespan of the data source in months.

- Quality of data source entities and aliases

$$QD = \mu_{alias} + n_{entities} + Mo_{alias}$$

where:

- 

$$\mu_{alias} = \frac{Mean\ of\ aliases\ per\ entity\ for\ the\ data\ source}{Mean\ of\ total\ number\ of\ aliases\ per\ data\ source}$$

- $n_{entities}$ is the total number of entities in the data source
-

$$Mo_{alias} = \frac{\text{Mode of aliases per entity for the data source}}{\textit{Mode of number of aliases per entity across all the data sources}}$$

If more than two data sources are available, then they can be arranged in a suitable ranked sequence based on the same factors and/or metric described above.

Figure 7 illustrates an example computer-implemented method 700 which makes use of the data structure 100 of Figure 1. Portions of the method 700 can variously be used for one or more of: automatically tagging an entity token, automatically tagging a data set, generating a knowledge graph, and configuring a network.

If a data set is to be tagged, then the method 700 begins with separating the data set into a plurality of text tokens (words or phrases) at step s710, for example using a sentence tokeniser. One or more entity tokens are then identified amongst the plurality of text tokens at step s720, for example using an entity ruler, preferably an entity ruler constructed based on the data structure 100, using each of the aliases stored therein. Each entity token is then processed as follows, starting with selection of the next entity token at step s730.

If the data structure 100 comprises a tag hash table 160 then it can be used in an optional precursor process to tag entity tokens which are an exact match for entities stored in the tag hash table without requiring any vector embedding step, to reduce the time and computing resources required. This precursor process begins at step s731, where an operation comprising a hash function is performed on the entity token to generate a token hash value. (The operation performed is the same operation used to generate the tag hash table 160.) That token hash value is then looked up in the tag hash table at step s732. If looking up the token hash value yields a null result at query q733, the flow proceeds to step s750. If looking up the token hash value at query q733 yields a non-null result, the entity token is tagged using that result at step s740, bypassing steps s750, s760, and s770 described below. Tagging can comprise adding the tag to the entity token (for example in parentheses following the entity token). Alternatively or additionally, tagging can comprise replacing the entity token with the tag. Tagging can facilitate further automatic text processing, such as summarising, e.g. by replacing multiple entity tokens having the same tag with a single representative entity token. Following tagging of the entity token, the flow proceeds to query q790 to determine if there are any entity tokens remaining to be processed. If so, the flow loops back to step s730.

As mentioned above, if looking up the token hash value at step s732 yields a null result, the flow proceeds from query q733 to step s750. Alternatively, if no tag hash table is used, then the flow proceeds directly from step s730 to step s750. At step s750 the entity token is vector embedded to produce a token vector. The token vector is produced using the same ANN used to generate the vector hash table vector embeddings at step s250 of Figure 2, or using an ANN having weights corresponding thereto.

A distance between the token vector and each of the data substructure vector embeddings is then determined at step s760. The entity token is tagged using one or more of the tags, or using one or more alternative tags, in dependence on the determined distances at step s770 before the flow proceeds to query q790.

Step s770 can for example comprise steps s771 to s777/s778. At step s771, a predetermined number, j (e.g. 2 or 3), of candidate data substructure vector embeddings associated with the j shortest of the distances between the token vector and each of the data substructure vector embeddings are determined. Then, at step s772, candidate vector hash table alias strings associated with each of those j candidate data substructure vector embeddings are retrieved by performing the same hash-based operation on the candidate data substructure vector embeddings that was used to store the alias strings in the vector hash table. Next, at step s773, a quantitative similarity measure between the entity token and each of the aliases in the j retrieved candidate vector hash table alias strings is determined. The quantitative similarity measure can for example be determined by string sequential matching. A highest quantitative similarity measure of those quantitative similarity measures is then determined at step s774 and is tested against a predetermined token-alias similarity threshold (e.g. 90%) at query q776. If the highest quantitative similarity measure exceeds the predetermined token-alias similarity threshold, then the entity token is tagged using one or more of the one or more corresponding tags (e.g. a standardised entity name 126 and an entity type label 128 stored in the bucket 122 of the vector hash table 120) at step s777. If the highest quantitative similarity measure does not exceed the predetermined token-alias similarity threshold, then the entity token is tagged using one or more of the one or more alternative tags (e.g. 'unknown entity' and/or 'entity type unknown').

The choice of k is a trade-off between the tendency of a higher value of j to result in an increased chance of the entity being recognised as one of the entities known from the data structure 100, and the additional computing resources required to perform steps s772 to s774.

As noted above, an alternative tag used at step s778 can be a default tag indicating that the token entity is unrecognised. Alternatively, the entity token can be used to add an entry to the data structure 100 at step s780. That is, the alternative tag is an additional standardised entity name based on the entity token. Adding an entry to the data structure 100 at step s780 can for example comprise performing an operation comprising a hash function on the token vector to generate a token hash value at step s781 (the same operation used to store the alias strings in the vector hash table when it was generated), then storing the entity token in a bucket of the vector hash table at a memory location indicated by the token hash value at step s782; and storing the token vector in the data substructure at step s783.

Once all the entity tokens have been processed (i.e. the outcome of query q790 is negative), tagging of the data set is complete. The tagged data set can then optionally be used to generate a knowledge graph at step s791. Such a knowledge graph can be used to inform determination of a network configuration action at step s792, which action can be caused at step s793. Knowledge graphs are knowledge bases that use a graph-structured data model or topology. Knowledge graphs comprise nodes, representing entities, and edges interlinking nodes, representing semantic connections between those entities. Large knowledge graphs are sometimes referred to as enterprise knowledge graphs. Knowledge graphs can exist solely as databases or can also be rendered for display as mind maps on user interface devices. Applications of knowledge graphs include question answering, research storage, simulations, risk management, process monitoring, recommendation/prediction systems, and supply chain management. Knowledge graphs can be built automatically, for example using deep learning and natural language processing (NLP) techniques.

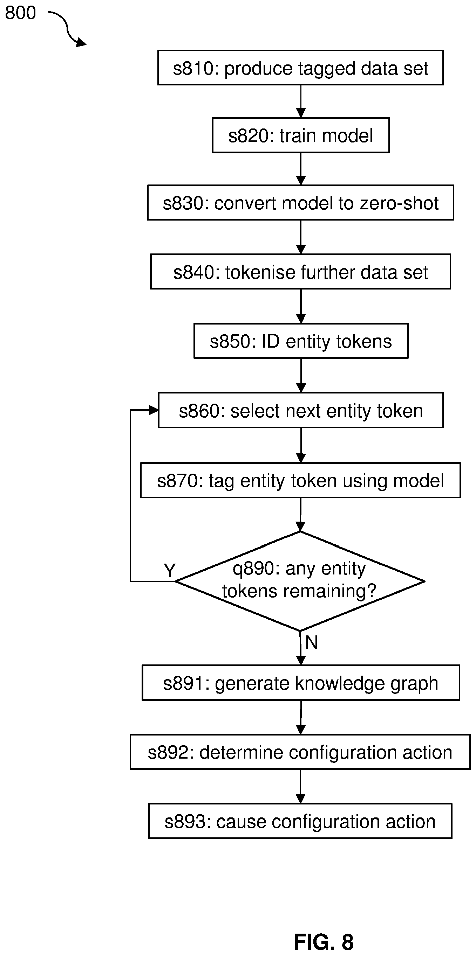

The tagged data set can alternatively or additionally be used to train an NER ML model, for example per the example computer-implemented method 800 illustrated by Figure 8. At step s810 a tagged data set is produced, for example as described above in relation to Figure 7. At step s820 the NER ML model is trained on the tagged data set to produce a trained NER ML model. The trained NER ML model can optionally be converted to zero-shot at step s830 according to known techniques. This allows it to recognise unknown entities (i.e. those not referred to in the data structure 100). The trained NER ML model (whether converted to zero-shot or not) can then be used to automatically tag an entity token, by inputting the entity token into the trained NER ML model.

In fact, an entire further data set can be automatically tagged in this manner, as illustrated by step s840 to query q890 of Figure 8. At step s840 the further data set is separated into a further plurality of text tokens. Then at step s850 one or more further entity tokens are identified amongst the further plurality of text tokens. A next further entity token is selected at step s860 and tagged using the trained NER ML model at step s870. Query q890 then determines if there are any further entity tokens remaining to be processed and loops back to step s860 if so. If not, the further tagged data set is produced. It can optionally be used to generate a knowledge graph at step s891.

A network configuration action can be determined at step s892 and caused at step s893 based on the trained NER ML model (whether zero-shot or not), or a knowledge graph produced using it.

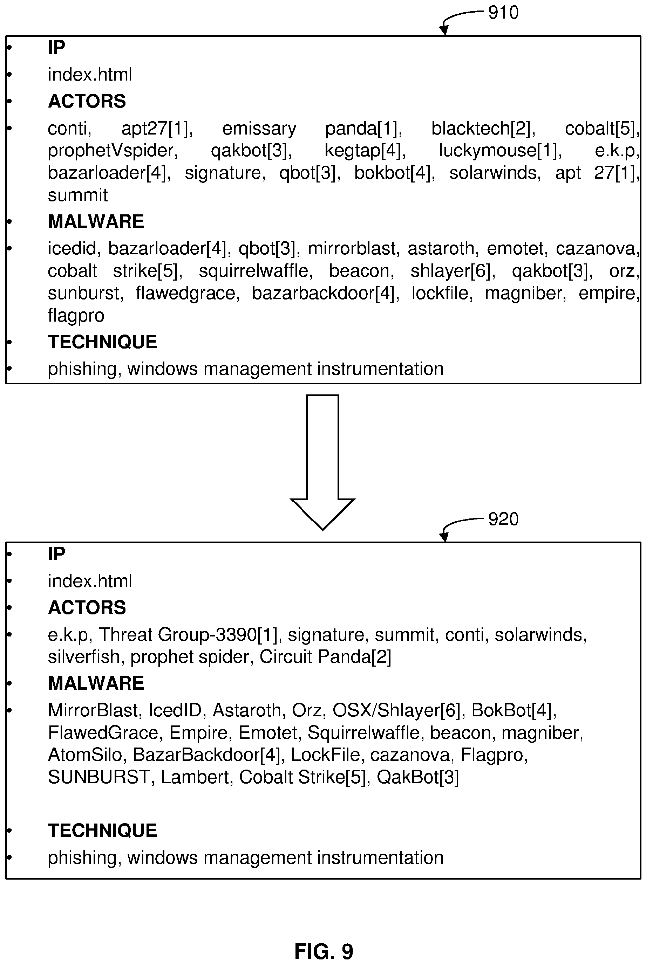

Figure 9 illustrates an example result of using the data set tagging methods described above. Box 910 shows a data set to be tagged, in this case a cybersecurity threat report. Box 920 shows that data set after tagging and summarising. In both cases the numerals in square brackets do not form part of the data sets - they are included to aid in illustrating the example by identifying particular entities. The original threat report 910 comprises lists of actors and malware. The actors list for example includes the strings 'apt27', 'emissary panda', 'luckymouse', and 'apt 27' which, as indicated by the '[1]' following each of those strings, are all aliases for a single entity. According to the data structure 100 of Figure 1, that entity is an actor with standardised entity name 'Threat Group-3390'. Thus all the entity [1] entity tokens are tagged by being replaced by the string 'Threat Group-3390'. Summarisation then results in the four occurrences of entity [1] being reduced to a single occurrence of 'Threat Group-3390' in the processed threat report 920. As another example, entity [4] appears in the actors list of threat report 910 as 'kegtap', 'bazarloader', and 'bokbot', as well as in the malware list as 'bazarloader', and 'bazarbackdoor'. According to the data structure 100, that entity is a malware with standardised entity name 'BokBot'. Thus all the entity [4] entity tokens are tagged by being replaced by the string 'BokBot'. Summarisation then results in the five occurrences of entity [4] being reduced to a single occurrence of 'BokBot' in the processed threat report 920. That occurrence is placed in the malware list since 'malware' is the entity type label stored for entity [4] in the data structure 100, indicating that the 'malware' entity type label originates from a primary data source. In alternative implementations, the choice of list to locate entity [4] in in the processed threat report 920 could be determined according to some other criterion, or summarisation could be limited to within each of the actor and malware lists, so that 'BokBot' appears in both the actor and malware lists of the processed threat report.

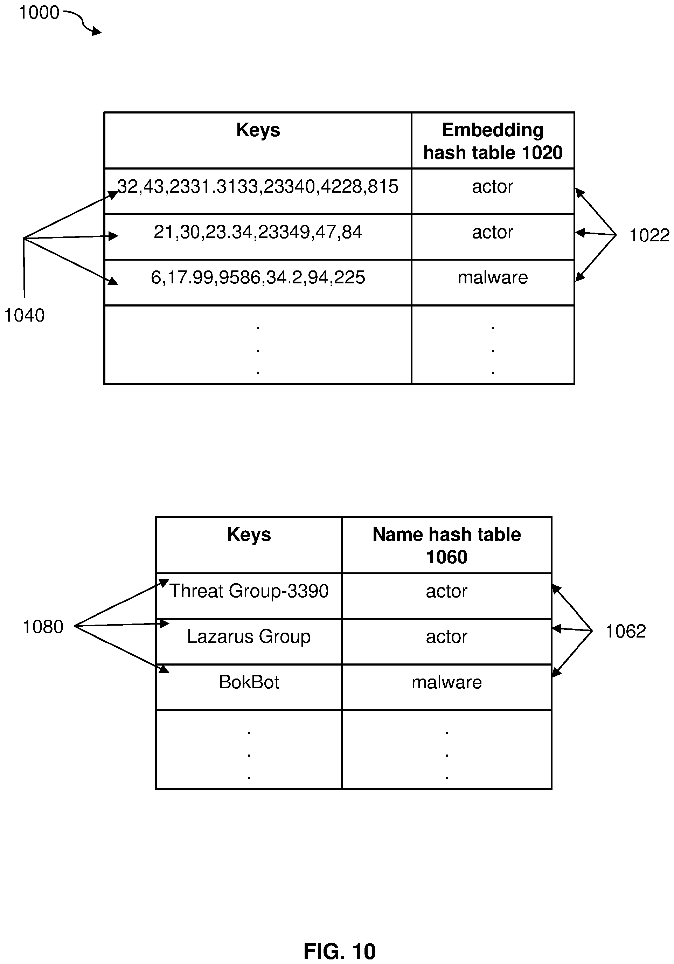

Figure 10 illustrates an example of the second data structure referred to above, which can for example be configured for use in a computer-implemented method of configuring a network. This data structure 1000 comprises an embedding hash table 1020 consisting of buckets 1022. Each bucket of the embedding hash table 1020 stores an entity type label for a particular entity name. In the example of Figure 10, the entities relate to computer network security. In other examples, the entities could relate to telecommunications network management or other technical fields.

The keys to the embedding hash table 1020, which are vector embeddings of the corresponding entity names, are shown at 1040. The data structure 1000 comprises the keys 1040 stored in a data substructure such as a database (e.g. a vector database), or a file in a suitable format (e.g. TXT, JSON, or CSV).

The data structure 1000 can optionally further comprise a name hash table 1060 consisting of buckets 1062. For each bucket of the name hash table 1060, a corresponding key 1080 is an entity name. Each bucket 1062 of the name hash table 1060 stores an entity type label associated with the entity referred to by its key. If access to the keys of the name hash table is required then they can be stored in a data substructure of the data structure 1000, such as a database. The name hash table 1060 is constructed by, for each entity name-entity type label combination, performing an operation comprising a hash function on the entity name, and storing the corresponding entity type label at a memory location indicated by the result of that operation.

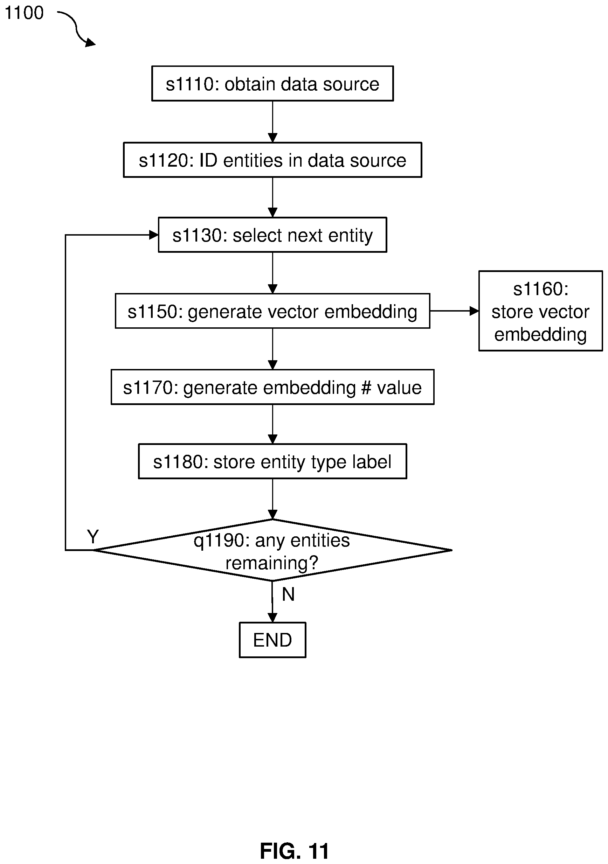

Figure 11 illustrates an example computer-implemented method 1100 of generating the data structure 1000 of Figure 10. At step s1110 a data source is obtained. For example, MITRE ATT&CK or Malpedia, as described above in relation to Figure 2.

At step s1120 one or more entities referred to in the data source, each referred to by an entity name and a corresponding entity type label, are identified. (The data source may explicitly indicate entities, or known entity recognition techniques can be employed, for example statistical techniques e.g. using HMMs or CRFs.) The flow from step s1130 to query q1190 is then enacted for each of those identified entities. At step s1130, a next entity is selected. Then, at step s1150 a vector embedding 1040 of the entity name is generated. That vector embedding is stored in the data substructure at step s1160. At step s1170 an operation comprising a hash function is performed on that vector embedding to generate an embedding hash value. At step s1180 the entity type label is then stored in a bucket 1022 of the embedding hash table 1020 at a memory location indicated by that embedding hash value. Finally, query q1190 determines whether there are any entities remaining to be processed. If so, the flow loops back to step s1130. If not, the process ends.

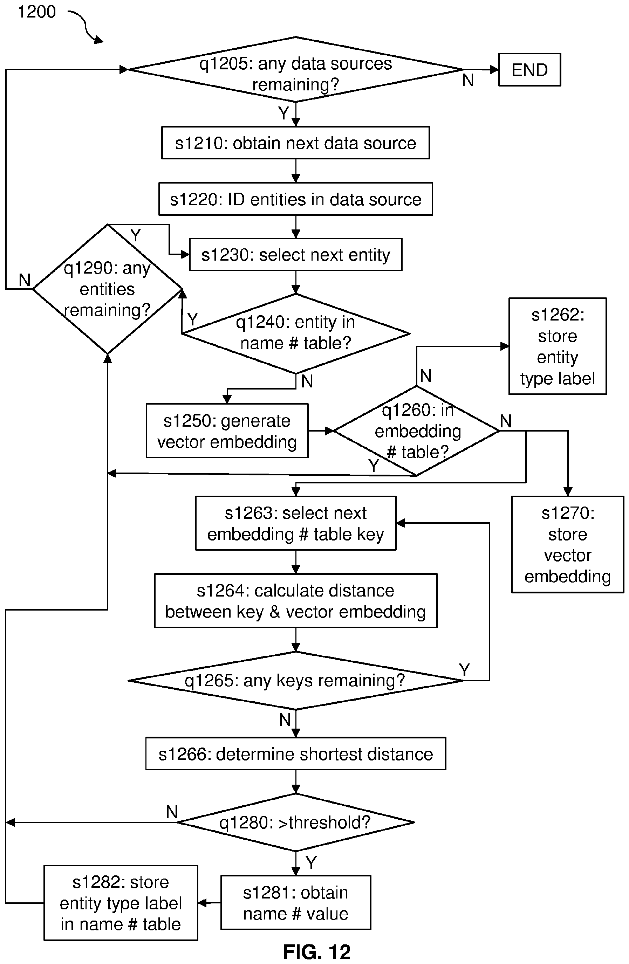

As for the first data structure 100, the second data structure 1000 can be generated based on multiple data sources. A sequence of data sources can be established, for example in the manner described above in relation to the first data structure. The example computer-implemented method 1200 of Figure 12 can then be used to generate the data structure 1000.

The method 1200 results in the embedding hash table 1020 storing an entry for every unique entity name identified in any of the data sources. To reduce storage requirements, the name hash table 1060 also produced using the method 1200 only stores distinct entity names, not slight variations (e.g. it might store 'APT 27' but not 'apt27', or 'APT#27').

The method 1200 starts with querying whether any data sources remain to be processed at query q1205. (If not, the process ends.) If so, the next data source in the sequence is obtained at step s1210 and then is processed as follows.

At step s1220, one or more entities referred to in that data source by an entity name and a corresponding entity type label are identified. (The data source may explicitly indicate entities, or known entity recognition techniques can be employed, for example statistical techniques e.g. using HMMs or CRFs.) Each one of those entities is then processed as follows.

A next entity is selected at step s1230. It is then determined at query q1240 whether the entity is in the name hash table 1060 by looking up the entity name in the name hash table 1060 (i.e. performing the same operation comprising a hash function on the entity name that is used to generate entries of the name hash table 1060 at step s1281 described below, and determining whether the corresponding memory location stores an entity type label or is empty). If that lookup operation yields a non-null result, then it is determined whether there are any entities remaining to be processed at query q1290 and the flow returns to step s1230 if so, or query q1205 if not. Thus if query q1240 yields a non-null result, steps s1250 to s1282 described below are bypassed.

If the lookup operation of query q1240 yields a null result, then a vector embedding of the entity name is generated at step s1250. It is then determined at query q1260 whether the entity is in the embedding hash table 1020 by looking up the vector embedding generated at step s1250 in the embedding hash table 1020 (i.e. performing an operation comprising a hash function on the vector embedding, and determining whether the corresponding memory location stores an entity type label or is empty). If that lookup operation yields a result, then the flow proceeds to query q1290, bypassing steps s1262 to s1282 described below. (Using a deterministic vector embedding method increases the likelihood of this lookup operation yielding a non-null result.) If not, then the entity type label is stored in a bucket 1022 of the embedding hash table 1020 at a memory location indicated by the embedding hash value generated for query q1260 at step s1262. In this way, an entry is generated in the embedding hash table 1020 for each new entity name identified.

In addition, each new entity name identified is considered for addition to the name hash table 1060. In response to a null result to both lookup operations q1240 and q1260, steps s1263 to s1266 compare the vector embedding of the entity name generated at step s1250 to each of the keys 1040 of the embedding hash table stored in the data substructure. At step s1263 a next key 1040 is selected. A distance (e.g. a Euclidean distance) between that key and the vector embedding of the entity name is then calculated at step s1264. Query q1265 then tests whether there are any keys remaining to be processed in the data substructure. The flow loops back to step s1263 if so, or proceeds to step s1266 if not. Step s1266 determines the shortest of the calculated distances and then query q1280 determines whether that shortest distance is above a threshold distance. If it is, then the same operation comprising a hash function used in query q1240 is performed on the entity name to generate a name hash value at step s1281 (or the name hash value generated at query q1240 is retrieved, if it was previously stored) and the entity type label is stored in a bucket 1062 of the name hash table 1060 at a memory location indicated by the name hash value at step s1282 before the flow proceeds to query q1290 to determine whether there are any entities remaining. If the shortest distance is not above the threshold distance, then the flow proceeds directly from query q1280 to query q1290. The threshold distance can be set to provide a suitable compromise between storage requirements for the name hash table 1060 and entity labelling speed and computing resource requirements (since, as will be described below, the name hash table can be used to perform a precursor portion of an entity labelling method, in a similar way to the tag hash table 160 of the first data structure 100). Whether the entity is added to the name hash table 1060 or not, if query q1260 reveals it is not in the embedding hash table 1020 then at step s1270 the vector embedding is stored in the data substructure.

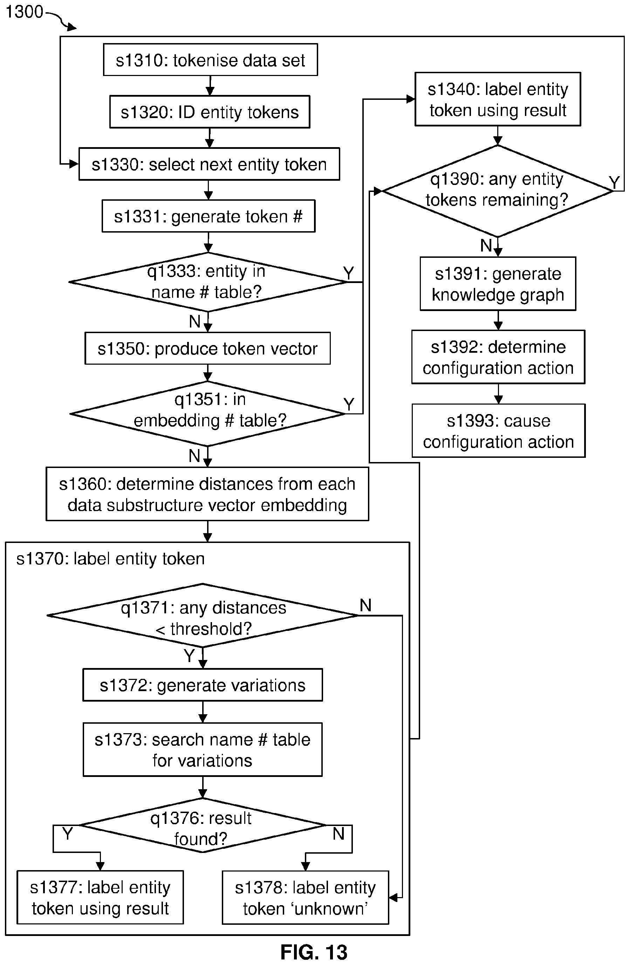

Figure 13 illustrates an example computer-implemented method 1300 which makes use of the data structure 1000 of Figure 10. Portions of the method 1300 can variously be used for one or more of: automatically tagging an entity token, automatically tagging a data set, generating a knowledge graph, and configuring a network.

If a data set is to be tagged, then the method 1300 begins with separating the data set into a plurality of text tokens at step s1310, for example using a sentence tokeniser. One or more entity tokens are then identified amongst the plurality of text tokens at step s1320, for example using an entity ruler, preferably an entity ruler constructed based on the data structure 1000, using each of the entity names stored therein. Each entity token is then processed as follows, starting with selection of the next entity token at step s1330.

If the data structure 1000 comprises a name hash table 1060 then it can be used in an optional precursor process to label entity tokens which are an exact match for entities stored in the name hash table without requiring any vector embedding step, to reduce the time and computing resources required. This precursor process begins at step s1331, where an operation comprising a hash function is performed on the entity token to generate a token hash value. (The operation performed is the same operation used to generate the name hash table 1060 at query q1240 to step s1262 of Figure 12.) Query q1333 then uses that token hash value to look up the entity token in the name hash table. If looking up the token hash value yields a null result, the flow proceeds to step s1350. If looking up the token hash value yields a non-null result, the entity token is labelled using that result at step s1340, bypassing steps s1350 to s1370 described below. Labelling can comprise adding the entity type label to the entity token (for example in parentheses following the entity token). Alternatively or additionally, labelling can comprise replacing the entity token with the entity type label. Following labelling of the entity token, the flow proceeds to query 1390 to determine if there are any entity tokens remaining to be processed. If so, the flow loops back to step s1330.

As mentioned above, if looking up the token hash value at query q1333 yields a null result, the flow proceeds from query q1333 to step s1350. Alternatively, if no name hash table is used, then the flow proceeds directly from step s1330 to step s1350. At step s1350 the entity token is vector embedded to produce a token vector. The token vector is produced using the same ANN used to generate the embedding hash table vector embeddings at step s1150 of Figure 11 or step s1250 of Figure 12, or using an ANN having weights corresponding thereto.

Once the token vector has been produced at step s1350, it is used to determine at query q1351 whether the entity is in the embedding hash table 1020 by looking up the vector embedding generated at step s1350 in the embedding hash table 1020 (i.e. performing the same operation comprising a hash function on the vector embedding that is used to generate entries of the embedding hash table 1020 at step s1170 of Figure 11 or query q1260 of Figure 12, and determining whether the corresponding memory location stores an entity type label or is empty). If that lookup operation yields a non-null result, then the entity token is labelled using that result at step s1340, bypassing step s1360 described below. (Using a deterministic vector embedding method increases the likelihood of this lookup operation yielding a non-null result.) If the result of the lookup operation of query q1351 is null, then the flow proceeds to step s1360.

At step s1360, a distance between the token vector and each of the data substructure vector embeddings is determined. The entity token is labelled using one of the labels in the data structure 1000, or as 'unknown', in dependence on the determined distances at step s1370 before the flow proceeds to query q1390.

Step s1370 can for example comprise query q1371 to steps s1377/s1378. At query q1371 it is determined whether any of the distances determined at step s1360 are lower than a predetermined threshold. If not, the entity token is labelled as 'unknown' at step s1378. If so, a set of variations of the entity token are generated at step s1372 in accordance with one or more predetermined rules. For example, these rules can result in the generation of common nomenclature variations such as 'APT27', 'APT#27', 'APT-27', and/or common typographical errors such as 'PAT27' or 'AP T27'. The name hash table is then searched using one or more of the set of variations at step s1373. If query q1376 reveals that a result has been found, then the entity token is labelled with that result at step s1377. If query q1376 is answered in the negative, then the entity token is labelled as 'unknown' at step s1378.

Once all the entity tokens have been processed (i.e. the outcome of query q1390 is negative), labelling of the data set is complete. The labelled data set can then optionally be used to generate a knowledge graph at step s1391. Such a knowledge graph can be used to inform determination of a network configuration action at step s1392, which action can be caused at step s1393. Alternatively, the labelled data set can be used in the computer-implemented method 800 illustrated by Figure 8 and described above, where tagging in this case refers to labelling with entity type labels.

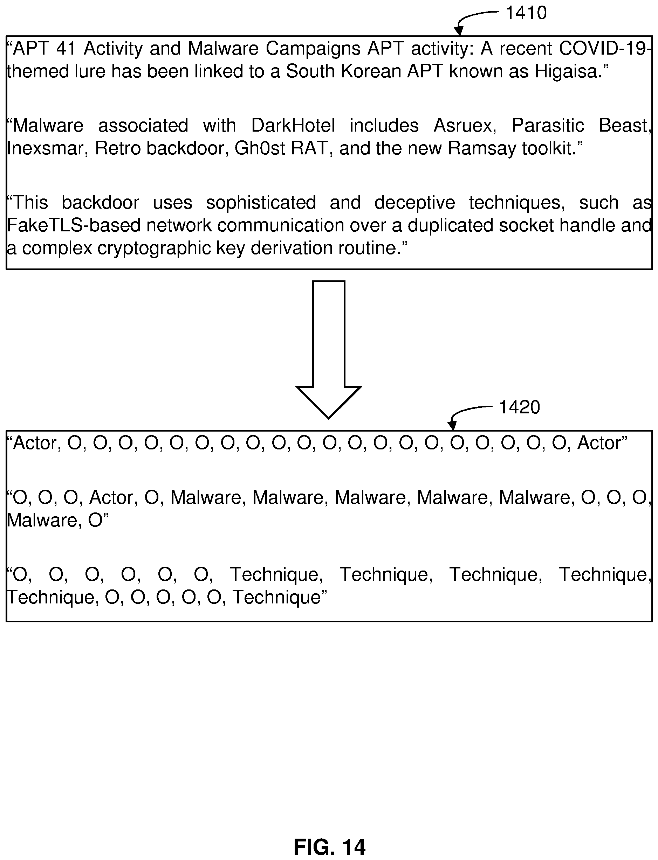

Figure 14 illustrates an example result of using the data set tagging methods described above. Box 1410 shows a data set to be tagged, in this case a set of extracts from cybersecurity threat reports. Box 1420 shows labels generated for each of the tokens in that dataset. In this case the labels specify whether each token is an actor, malware, technique, or other entity (O).

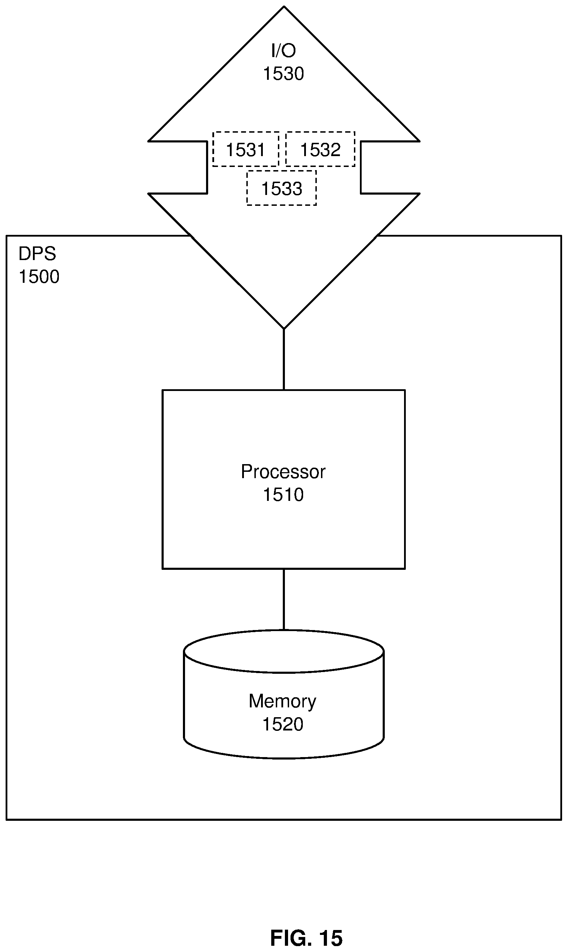

Figure 15 schematically illustrates an example data processing system (DPS) 1500 capable of performing any of the methods described above. It comprises a processor 1510 operably coupled to both a memory 1520 and an interface (I/O) 1530.

The memory 1520 can optionally comprise computer program instructions which, when the program is executed by the processor 1510, cause the data processing system 1500 to carry out any of the methods described above. Alternatively or additionally, the interface 1530 can optionally comprise one or both of a physical interface 1531 configured to receive a data carrier having such instructions stored thereon and a receiver 1532 configured to receive a data carrier signal carrying such instructions.

The receiver 1532, when present, can be configured to receive messages. It can comprise one or more wireless receiver modules and/or one or more wired receiver modules. The interface 1530 can optionally comprise a transmitter 1533 configured to transmit messages. The transmitter 1533, when present, can comprise one or more wireless transmitter modules and/or one or more wired transmitter modules.

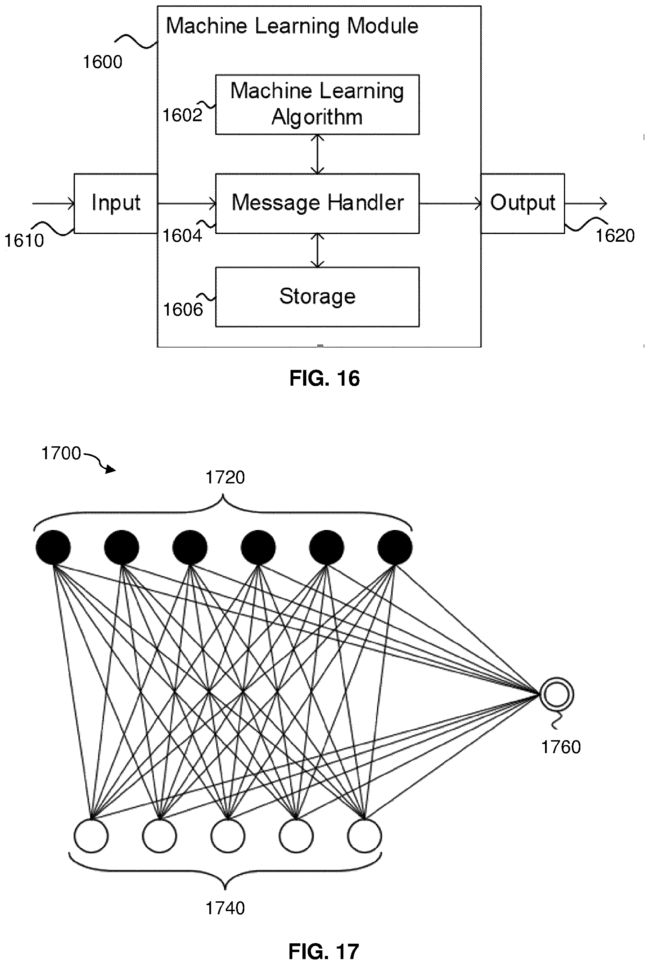

Figure 16 is a component diagram of an example ML module 1600 which can be used to perform the ML tasks described above. The ML module 1600 is a discrete software module in that it is individual, separate and/or distinct and preferably portable in the sense that the module 1600 can be stored and/or transmitted for execution in potentially multiple execution environments such as physical or virtual computer systems or software platforms executing in a computer system such as runtime environments, operating systems, platform software and the like. The module 1600 encapsulates functionality and data storage and can be implemented, for example, as an object or instantiable class in an object-oriented environment or as a software library having, in execution, access to a memory such as a memory heap.

The ML module 1600 comprises an executable ML algorithm 1602 such as any of the ML algorithms hereinbefore described or other suitable ML algorithms as will be apparent to those skilled in the art. Suitable ML algorithms are configurable to execute within the scope of the module 1600 based on input parameters including, for example, domain data and/or configuration parameters as an input for the algorithm 1602 to generate an ML result such as range data and/or other output data. For example, the ML algorithm 1602 can be provided as a method of a software object or a subroutine, procedure, or function in a software library. Thus, the ML algorithm 1602 is executable to perform ML functions including any or all: a training phase of operation for training the algorithm 1602 where the algorithm 1602 is supervised or semi-supervised; and/or a processing phase of operation of the algorithm for providing one or more ML results.

In conjunction with the ML algorithm 1602, and accessible to the algorithm 1602, the module 1600 further comprises a storage 1606 as a data store for the storage of data by the algorithm 1602. The storage 1606 can be a volatile or non-volatile storage such as a memory, and is encapsulated by the ML module 1600 either or both by a declaration, definition, specification or representation of the ML module 1600 (such as a software class definition or serialised software component) or by a manner of execution of the module 1600 at runtime such as by a memory heap or other memory structure suitable for allocation at runtime for constituting the storage 1606 in association with the module 1600. Thus, the storage 1606 is used, inter alia, by the algorithm 1602 for the storage of data required by the algorithm such as ML parameters, ML results, ML data structures including representations of ML models such as, inter alia: tree data structures; representations of regression analysis data structures; representations of neural network data structures; variables; and any other data that may be stored by the ML algorithm 1602. Thus, in this way, the ML module 1600 provides a discrete encapsulation of a ML algorithm 1602 and data required for and by the algorithm 1602 within a single module 1600.

The ML module 1600 further comprises an interface for communication external to the module 1600 that is the mechanism through which the algorithm 1602 communicates with components and/or entities outside the module 1600. The interface can be generalised as comprising an input interface 1610 and an output interface 1620 that can be defined and/or configured together, and which are connected by a message handler 1604 operably connected to the ML algorithm 1602 and the storage 1606. The input 1610 provides a mechanism through which input data can be communicated to the ML module 1600 including input for the algorithm 1602. The output 1620 provides a mechanism through which output data can be communicated by the ML module 1600 including output for the algorithm 1602. For example, ML parameters including configuration information, training data and ML input (domain) information can be communicated via the input 1610 as at least part of input data. Further, for example, ML results such as output data can be communicated via the output 1620 as at least part of output data.

Figure 17 schematically illustrates an example restricted Boltzmann machine (RBM) 1700, which is a stochastic neural network, i.e. a network of neurons where each neuron has some random behaviour when activated. An RBM such as the RBM 1700 can be used to perform the ML tasks described above. The RBM 1700 consists of one layer of visible units 1720, one layer of hidden units 1740, and a bias unit 1760. Each visible unit 1720 is connected to all the hidden units 1740 (this connection is undirected, so each hidden unit 1740 is also connected to all the visible units 1720), and the bias unit 1760 is connected to all the visible units 1720 and all the hidden units 1740. The bias unit 1760 is used to allow other units to learn an appropriate threshold. No visible unit 1720 is connected to any other visible unit 1720 and no hidden unit 1740 is connected to any other hidden unit 1740. After successful learning, an RBM provides a closed-form representation of the distribution underlying the training data. The RBM 1700 is trained to model a joint probability distribution of inputs tokens and corresponding vector embeddings, both represented by the visible units 1720 of the RBM 1700. The hidden units 1740 represent a reduced set of features that, after training, can constitute a set of latent factors. The RBM 1700 works by updating states of some units given the states of others.

Deep learning is a branch of ML which focuses on learning meaningful representations of data. Various deep learning architectures such as deep belief networks, convolutional neural networks, and stacked autoencoders have been applied to fields including natural language processing. Stacked autoencoders can be used to perform the ML tasks described above. An autoencoder is a simple (e.g. 3-layer) artificial neural network composed of, for example, an input layer, a hidden layer, and an output layer. Typically, a number of hidden units (or neurons/nodes) is less than a number of visible (input or output) units. As a result, when data is passed through such a network, it first compresses (encodes) an input vector to "fit" in a smaller representation, and then seeks to reconstruct (decode) it back. For each input x, it is first mapped to a hidden layer y, and an output layer tries to reconstruct x. Training a network seeks to minimise a reconstruction error, i.e. to find a most efficient compact representation (encoding) for input data. Autoencoders are typically trained using backpropagation with stochastic gradient descent. A stacked autoencoder is a neural network consisting of multiple layers of sparse autoencoders in which the outputs of each layer are connected to the inputs of a successive layer. Unsupervised pre-training of a network can be undertaken one layer at a time. Once a first k layers are trained, it is possible to train the (k+1)-th layer using an internal representation (i.e. feature vector) of the k-th layer. The size of feature vector is gradually reduced at each layer. For example, stacked autoencoders can be networked with five layers that compress a number of features from, e.g. 20,000 to 250. During a training phase denoising autoencoders may optionally be used instead of basic autoencoders. A denoising autoencoder adds a stochastic corruption step operating on the input. The idea is to force autoencoders to not learn an identity function, but more robust features, by reconstructing the input from a corrupted version of it. This way an autoencoder needs to capture the statistical dependencies between the inputs to reconstruct a distorted input. To use stacked autoencoders for extracting important features from a data source, all the information collected for each data record in the data source needs to be converted to fixed-size input feature vector. An autoencoder can take an input $x \in [0,1]^d$ and maps it (with an encoder) to a hidden representation $y \in [0,1]^{d'}$. For example, a binary value is assigned to each input node to indicate whether or not particular information or a particular feature is contained in the data record. An entire (binary) input feature vector provides an uncompressed representation for a record. A size of the input vector depends on the (training) datasets and should be large enough to sufficiently represent a variety of possible feature values contained in different event log sets.

**INTERPRETATION NOTES**

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The word 'consisting' is intended to mean 'including only'. The word 'comprising' is intended to mean 'including at least', and therefore includes, in a limiting case, 'consisting'.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Computing resources, as referred to herein, include electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

### Claims

1. A data structure comprising a hash table consisting of one or more buckets, referred to herein as a 'vector hash table', wherein:

   each bucket of the vector hash table stores a string comprising one or more aliases for a respective entity, referred to herein as an 'alias string'; and
   for each bucket, a corresponding key is a vector embedding of that alias string.

2. The data structure of claim 1, further comprising a data substructure storing all of the keys to the vector hash table.

3. A computer-implemented method of generating the data structure of either of claims 1 or 2, the method comprising:

   obtaining a data source;
   identifying one or more entities referred to in the data source; and
   for each of those one or more entities:

      i. identifying, from the data source, an alias or aliases for that entity;
      ii. generating an alias string from, respectively, that alias or a combination of those aliases;
      iii. generating a vector embedding of the alias string;
      iv. performing an operation comprising a hash function on that vector embedding to generate an embedding hash value; and

v. storing the alias string in a bucket of the vector hash table at a memory location indicated by the embedding hash value.

4. A computer-implemented method of updating a primary data structure generated from a primary data source using the method of claim 3 as dependent on claim 2, the method comprising:

generating a secondary data structure from a secondary data source using the method of claim 3 as dependent on claim 2;

for each vector embedding of the secondary data structure:

A. determining a distance between that secondary data structure vector embedding and each of the primary data structure vector embeddings; and

B. determining, in dependence on those distances, whether to:

I. merge the corresponding secondary data structure entry with one of the primary data structure entries; or

II. add the corresponding secondary data structure entry to the primary data structure.

5. A computer-implemented method of automatically tagging an entity token using the data structure of claim 2, wherein each bucket of the vector hash table also stores one or more tags; the method comprising:

vector embedding the entity token to produce a token vector;

determining a distance between the token vector and each of the data substructure vector embeddings; and

tagging the entity token using one or more of the tags, or using one or more alternative tags, in dependence on the determined distances.

6. A computer-implemented method of automatically tagging a data set, the method comprising:

separating the data set into a plurality of text tokens;

identifying one or more entity tokens amongst the plurality of text tokens; and

tagging each entity token according to the method of claim 5 to produce a tagged data set.

7. A computer-implemented method of training a named entity recognition, 'NER', machine learning, 'ML', model, the method comprising:

performing the method of claim 6 to produce a tagged data set; and

training the NER ML model on the tagged data set to produce a trained NER ML model.

8. An NER ML model produced according to the method of claim 7.

9. A computer-implemented method of automatically tagging an entity token, the method comprising inputting the entity token into the NER ML model of claim 9.

10. A computer-implemented method of generating a knowledge graph, the method comprising:

performing the computer-implemented method of claim 6; then

generating a knowledge graph based on the tagged data set.

11. A knowledge graph generated by performing the computer-implemented method of claim 10.

12. A computer-implemented method of configuring a network comprising:

performing the method of either of claims 6 or 10, wherein the data set relates to network security and/or management;

determining a network configuration action based on the tagged data set and/or the knowledge graph; and

causing the network configuration action to be performed.

13. A data processing system configured to perform the method of any of claims 3 to 7, 9, 10, or 12.

14. A computer program comprising instructions which, when the program is executed by a computer, cause the computer to carry out the method of any of claims 3 to 7, 9, 10, or 12.

15. A computer-readable data carrier having stored thereon the data structure of either of claims 1 or 2, or the computer program of claim 14.

16. A data carrier signal carrying the data structure of either of claims 1 or 2, or the computer program of claim 14.

| Keys | Vector hash table 120 |
|---|---|
| 31,43,2333.3133,23343,4228,811 | [APT 27,Emissary Panda,LuckyMouse,Threat Group-3390], [Threat Group-3390], [actor] |
| 21,32,23.33,23343,48,84 | [Lazarus Group,Zinc,Nickel Academy], [Lazarus Group], [actor] |
| 6,17.89,9588,34.2,94,222 | [Kegtap,BokBot,Bazarloader,Bazarbackdoor], [BokBot], [malware] |
| . . . | . . . |

124   126   128

140   122

| Keys | Tag hash table 160 |
|---|---|
| Threat Group-3390 | actor |
| Lazarus Group | actor |
| BokBot | malware |
| . . . | . . . |

180   162

**FIG. 1**

EP 4 610 847 A1

200

s210: obtain data source

s220: ID entities in data source

s230: ID aliases for next entity

s240: generate alias string

s250: generate vector embedding

s260: store vector embedding

s270: generate embedding # value

s280: store alias string

q290: any entities remaining?

Y

N

END

**FIG. 2**

300

q310: >1 alias?

N

Y

s320: select next alias pair

s330: determine similarity

q340: > threshold?

N

Y

s350: discard one of pair

q360: any pairs remaining?

Y

N

s370: form alias string

**FIG. 3**

400

s410: select next vector embedding
of secondary data structure

s415: retrieve
corresponding
alias string

s420: select next vector embedding
of primary data structure

s430: determine distance between
primary & secondary vector embeddings

q435: any primary
embeddings remaining?

Y

N

s460: determine whether to merge/add secondary entry into data structure

s440: determine k candidate primary vector
embeddings associated with k shortest distances

s445: retrieve k candidate primary alias strings

s450: determine quantitative similarity measures

s455: determine highest similarity measure

q460: > threshold?

Y

N

s462: merge primary
& secondary entries

s464: add secondary entry
to primary data structure

q470: any secondary
embeddings remaining?

N

END

Y

FIG. 4

500A

s521: generate combination alias string

s522: generate vector embedding of combination alias string

s523: generate combination #

s525: store combination vector embedding

s524: store combination alias string with primary data structure tag(s)

s526: delete primary hash table entry

s527: delete primary substructure entry

**FIG. 5A**

500B

s542: store secondary alias string in primary vector hash table with tag(s)

s544: store secondary vector embedding in primary data substructure

s546: copy secondary tag hash table entry into primary tag hash table

**FIG. 5B**

600

s610: ID primary aliases

s620: ID secondary aliases

s630: select next alias pair

s640: determine quantitative similarity

q650: >threshold?   N

Y

s660: discard one of pair

Y   q670: any pairs remaining?

N

s680: form alias combination

**FIG. 6**

700

s710: tokenise data set

s720: ID entity tokens

s730: select next entity token

s731: generate token #

s732: lookup in tag # table

q733: result null? — N

s740: tag entity token using result

q790: any entity tokens remaining? — Y / N

s791: generate knowledge graph

s792: determine configuration action

s793: cause configuration action

s750: produce token vector

s760: determine distances from each data substructure vector embedding

s770: tag entity token

s771: determine j candidate vector embeddings

s772: retrieve j alias strings

s773: determine similarities with entity token

s774: determine highest similarity

q776: > threshold? — Y / N

s777: use corresponding tag

s778: use alternative tag

s780: add entry

s781: generate token #

s782: store entity token

s783: store token vector

**FIG. 7**

800

s810: produce tagged data set

↓

s820: train model

↓

s830: convert model to zero-shot

↓

s840: tokenise further data set

↓

s850: ID entity tokens

↓

s860: select next entity token

↓

s870: tag entity token using model

↓

q890: any entity tokens remaining?

Y → (back to s860)

N ↓

s891: generate knowledge graph

↓

s892: determine configuration action

↓

s893: cause configuration action

**FIG. 8**

910

- **IP**
- index.html
- **ACTORS**
- conti, apt27[1], emissary panda[1], blacktech[2], cobalt[5], prophetVspider, qakbot[3], kegtap[4], luckymouse[1], e.k.p, bazarloader[4], signature, qbot[3], bokbot[4], solarwinds, apt 27[1], summit
- **MALWARE**
- icedid, bazarloader[4], qbot[3], mirrorblast, astaroth, emotet, cazanova, cobalt strike[5], squirrelwaffle, beacon, shlayer[6], qakbot[3], orz, sunburst, flawedgrace, bazarbackdoor[4], lockfile, magniber, empire, flagpro
- **TECHNIQUE**
- phishing, windows management instrumentation

920

- **IP**
- index.html
- **ACTORS**
- e.k.p, Threat Group-3390[1], signature, summit, conti, solarwinds, silverfish, prophet spider, Circuit Panda[2]
- **MALWARE**
- MirrorBlast, IcedID, Astaroth, Orz, OSX/Shlayer[6], BokBot[4], FlawedGrace, Empire, Emotet, Squirrelwaffle, beacon, magniber, AtomSilo, BazarBackdoor[4], LockFile, cazanova, Flagpro, SUNBURST, Lambert, Cobalt Strike[5], QakBot[3]

- **TECHNIQUE**
- phishing, windows management instrumentation

**FIG. 9**

1000

| Keys | Embedding hash table 1020 |
|---|---|
| 32,43,2331.3133,23340,4228,815 | actor |
| 21,30,23.34,23349,47,84 | actor |
| 6,17.99,9586,34.2,94,225 | malware |
| . . . | . . . |

1040

1022

| Keys | Name hash table 1060 |
|---|---|
| Threat Group-3390 | actor |
| Lazarus Group | actor |
| BokBot | malware |
| . . . | . . . |

1080

1062

**FIG. 10**

1100

s1110: obtain data source

s1120: ID entities in data source

s1130: select next entity

s1150: generate vector embedding → s1160: store vector embedding

s1170: generate embedding # value

s1180: store entity type label

q1190: any entities remaining?

Y

N

END

**FIG. 11**

1200

q1205: any data sources remaining? — N → END

Y ↓

s1210: obtain next data source

s1220: ID entities in data source

s1230: select next entity

q1290: any entities remaining? — Y → s1230

N →

q1240: entity in name # table? — N →

Y ↓

s1250: generate vector embedding →

q1260: in embedding # table? — N → s1262: store entity type label

N → s1270: store vector embedding

Y ↓

s1263: select next embedding # table key

s1264: calculate distance between key & vector embedding

q1265: any keys remaining? — Y → s1263

N ↓

s1266: determine shortest distance

q1280: >threshold? — N →

Y ↓

s1281: obtain name # value

s1282: store entity type label in name # table

**FIG. 12**

1300

s1310: tokenise data set

s1320: ID entity tokens

s1330: select next entity token

s1331: generate token #

q1333: entity in name # table? — Y

N

s1350: produce token vector

q1351: in embedding # table? — Y

N

s1360: determine distances from each data substructure vector embedding

s1370: label entity token

q1371: any distances < threshold? — N

Y

s1372: generate variations

s1373: search name # table for variations

q1376: result found?

Y — s1377: label entity token using result

N — s1378: label entity token 'unknown'

s1340: label entity token using result

q1390: any entity tokens remaining? — Y

N

s1391: generate knowledge graph

s1392: determine configuration action

s1393: cause configuration action

**FIG. 13**

— 1410

"APT 41 Activity and Malware Campaigns APT activity: A recent COVID-19-themed lure has been linked to a South Korean APT known as Higaisa."

"Malware associated with DarkHotel includes Asruex, Parasitic Beast, Inexsmar, Retro backdoor, Gh0st RAT, and the new Ramsay toolkit."

"This backdoor uses sophisticated and deceptive techniques, such as FakeTLS-based network communication over a duplicated socket handle and a complex cryptographic key derivation routine."

— 1420

"Actor, O, O, O, O, O, O, O, O, O, O, O, O, O, O, O, O, O, O, O, Actor"

"O, O, O, Actor, O, Malware, Malware, Malware, Malware, Malware, O, O, O, Malware, O"

"O, O, O, O, O, O, Technique, Technique, Technique, Technique, Technique, O, O, O, O, O, Technique"

**FIG. 14**

I/O
1530

1531  1532

1533

DPS
1500

Processor
1510

Memory
1520

**FIG. 15**

Machine Learning Module

1600

Machine Learning
Algorithm

1602

Input

1610

1604

Message Handler

Output

1620

1606

Storage

**FIG. 16**

1700

1720

1760

1740

**FIG. 17**

Europäisches
Patentamt

European
Patent Office

Office européen
des brevets

# EUROPEAN SEARCH REPORT

**Application Number**

EP 24 16 0156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PENG GAO ET AL: "ThreatKG: A Threat Knowledge Graph for Automated Open-Source Cyber Threat Intelligence Gathering and Management", ARXIV.ORG, CORNELL UNIVERSITY LIBRARY, 201 OLIN LIBRARY CORNELL UNIVERSITY ITHACA, NY 14853, 20 December 2022 (2022-12-20), XP091398677, * pages 1-3,8,9 * * figures 1-3 * | 1-16 | INV. G06F16/31 G06F16/35 |
| A | US 2020/322368 A1 (COHEN DVIR [IL] ET AL) 8 October 2020 (2020-10-08) * paragraphs [0020], [0077] * | 1-16 | |

**TECHNICAL FIELDS SEARCHED (IPC)**

G06F

The present search report has been drawn up for all claims

| Place of search | Date of completion of the search | Examiner |
|---|---|---|
| Munich | 6 August 2024 | Michalski, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 0156

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | Publication date | Patent family member(s) | Publication date |
|---|---|---|---|
| US 2020322368 A1 | 08-10-2020 | EP 3719685 A1 <br> US 2020322368 A1 | 07-10-2020 <br> 08-10-2020 |

EPO FORM P0459

For more details about this annex : see Official Journal of the European Patent Office, No. 12/82